# EUROPEAN PATENT APPLICATION

(11) **EP 4 187 204 A1**
(43) Date of publication of application: **31.05.2023**
(21) Application number: 22209823.8
(22) Date of filing: 28.11.2022
(51) Int. Cl.: G01C 21/34, G06Q 50/30, H04W 4/02

(54) **METHOD AND SYSTEM FOR GENERATING A PERSONALIZED ROUTING GRAPH FOR USE WITH SHARED VEHICLE HUBS**

(30) Priority: 29.11.2021 US 202117537002
(71) Applicant: HERE Global B.V., 5611 ZT Eindhoven (NL)
(72) Inventor: Beaurepaire,, Jerome, Chicago, 60606 (US); Neubauer,, Nicolas, Chicago, 60606 (US); Falla Cepeda,, David, Chicago, 60606 (US)
(74) Representative: Potter Clarkson

(57) **Abstract**

A system, method, and computer program product may be provided for generating a routing graph for a user. A system may include a memory configured to store computer program code instructions; and a processor configured to execute the computer program code instructions to define a geographic area of interest for the user; and identify a cluster of one or more mobility hubs in the area of interest. The processor may be further configured to create the routing graph from an edge of the one or more mobility hubs based on one or more preferences of the user, and provide the routing graph to a routing engine for calculating an intermodal route.

## Description

### TECHNOLOGICAL FIELD

The present disclosure generally relates to shared vehicle hubs, and more particularly relates to providing personalized routing graph to a user based user preference(s) and shared vehicle availability.

### BACKGROUND

Shared vehicle service providers operate in many geographical locations and may own a variety of shared vehicles corresponding to different modes of transport, for example, a shared bike, a shared scooter, a shared car, and the like. For navigating within a geographical area, these shared vehicles that belong to different modes of transport can be combined to offer new intermodal connections to users of the shared vehicles. However, providing a user with a sense of which shared vehicle types that are likely to be present in a given area remains difficult. Attempts to aggregate shared vehicle and microbility services in ways that are useful and predictable to users, such as with public transportation means, remains elusive.

Accordingly, there is a need for generating a routing graph for a user to facilitate intermodal navigation by using shared vehicle hub(s), and creating similarities in terms of user experiences and expectations between shared vehicles and publication transportation.

### BRIEF SUMMARY

Existing shared vehicle hubs do not provide sufficient reliability to guarantee that a shared vehicle will be present at a particular area at a given time. Existing shared vehicle hubs do not guarantee a quality of service to a user, such that the user can rely on the shared vehicle hubs as a virtual private transportation hub or station that a user can rely on when they need to go somewhere. Indeed, existing shared vehicle hubs do not make it easy for a user to make sense of information about shared vehicles. Thus, it would be advantageous to create similarities in terms of user experiences and user expectations between shared vehicles and public transportation. It will be advantageous for a system to aggregate shared vehicles and microbility services in ways that are useful and reliable for users. It will be further advantageous for a system that provides a user with a sense of which shared vehicle types are likely to be present in a particular area based on historical location information. The proposed solution described herein allows users of shared vehicle and microbility services to benefit from virtual private transportation hubs based on user preference and aggregated shared vehicle availability. The proposed solution described herein aggregates shared vehicle availability over a period of time, such as months or years, across a city, and cluster the shared vehicles in order to create virtual private transportation hubs that users can rely on when they need to go somewhere.

A system, a method, and a computer program product are provided in accordance with an example embodiment described herein for creating a personalized routing graph for a user such that the user is provided with their own virtual private transportation network that is based at least in part on their personal preference(s).

Embodiments disclosed herein may provide a system generating a routing graph for a user. The system includes at least one non-transitory memory configured to store computer program code instructions; and at least one processor configured to execute the computer program code instructions to define a geographic area of interest for the user. The processor is configured to identify a cluster of shared vehicles for one of more mobility hubs in the area of interest. The processor is configured to create the routing graph from an edge of the one or more mobility hubs based on one or more preferences of the user; and control an output interface to output the routing graph.

The processor may be further configured to update the routing graph with one or more additional mobility hubs based on updated location and availability data of a plurality of shared vehicles located within the one or more additional mobility hubs. The processor may be further configured to identify the cluster based on transient location of one or more shared vehicles located in the area of interest. The processor may be further configured to identify the cluster of the one or more mobility hubs based on a fixed area size, a line of sight between a plurality of shared vehicles, a grid level of a plurality of shared vehicles, or a combination thereof. The processor may be further configured to identify the cluster of the one or more mobility hubs based on one or more mobility patterns of the user. The processor may be further configured to aggregate location and availability of a plurality of public transportation vehicles in the area of interest for the user. The processor may be further configured to identify the cluster based on historical data about parking events associated with a plurality of shared vehicles, wherein the parking events include parking locations of the plurality of shared vehicles, durations of stay at the parking locations, or a combination thereof. The processor may be further configured to render a visualization of locations and reliability scores for each of the one or more mobility hubs on the output interface in a mapping application. The processor may be further configured to present comparisons between at least two routes in terms of reliability of the routes. In certain embodiments, the user preferences include user preference regarding types and brands of shared vehicles, cluster radii of the one or more mobility hubs, cleanliness of the shared vehicles, ratings associated with the shared vehicles, fuel or charging level of the shared vehicles, number of vehicles desired to create the one or more mobility hubs, distance to one or more available shared vehicles, and user subscription associated with the one or more shared vehicle service providers. The processor may be further configured to reserve at least one of shared vehicle in at least one or more mobility hubs. In certain embodiments, the shared vehicles are selected from the group consisting of shared bicycles, shared e-bicycles, shared kick scooters, shared scooters, and shared automobiles. The processor may be further configured to limit the area of interest for the user based on a starting and destination request by the user.

In an exemplary embodiment, a method is provided for generating a routing graph for a user, the method may include defining a geographic area of interest for the user. The method may include identifying a cluster of shared vehicles for one or more mobility hubs in the area of interest. The method may include creating the routing graph from an edge of the one or more mobility hubs based on one or more preferences of the user. The method may include providing the routing graph to a routing engine for calculating an intermodal route.

The method may further include updating the routing graph with one or more additional mobility hubs based on updated location and availability data of a plurality of shared vehicles located within the one or more additional mobility hubs. The method may further include identifying the cluster based on transient location of one or more shared vehicles located in the area of interest. The method may include identifying the cluster of the shared vehicles of one or more mobility hubs based on a fixed area size, a line of sight between a plurality of shared vehicles, a grid level of a plurality of shared vehicles, or a combination thereof.
The following numbered paragraphs are also disclosed:
1. A system for generating a routing graph for a user, the system comprising:
   at least one non-transitory memory configured to store computer program code instructions; and at least one processor configured to execute the computer program code instructions to:
   define a geographic area of interest for the user;
   identify a cluster of shared vehicles for one or more mobility hubs in the area of interest;
   create the routing graph from an edge of the one or more mobility hubs based on one or more preferences of the user; and
   provide the routing graph to a routing engine for calculating an intermodal route.
2. The system of paragraph 1, wherein the processor is further configured to update the routing graph with one or more additional mobility hubs based on updated location and availability data of a plurality of shared vehicles forming the one or more additional mobility hubs.
3. The system of paragraph 1, wherein the processor is further configured to identify the cluster based on transient location of one or more shared vehicles located in the area of interest.
4. The system of paragraph 1, wherein the processor is further configured to identify the cluster of the one or more mobility hubs based on a fixed area size, a line of sight between a plurality of shared vehicles, a grid level of a plurality of shared vehicles, or a combination thereof.
5. The system of paragraph 1, wherein the processor is further configured to identify the cluster of the one or more mobility hubs based on one or more mobility patterns of the user.
6. The system of paragraph 1, wherein the processor is further configured to aggregate location and availability of a plurality of public transportation vehicles in the area of interest for the user.
7. The system of paragraph 1, wherein the processor is further configured to identify the cluster based on historical data about parking events associated with a plurality of shared vehicles, wherein the parking events include parking locations of the plurality of shared vehicles, durations of stay at the parking locations, or a combination thereof.
8. The system of paragraph 1, wherein the processor is further configured to render a visualization of locations and reliability scores for each of the one or more mobility hubs on the output interface in a mapping application.
9. The system of paragraph 1, wherein the processor is further configured to present comparisons between at least two routes in terms of reliability of the routes.
10. The system of paragraph 1, wherein the user preferences comprise user preference regarding types and brands of shared vehicles, cluster radii of the one or more mobility hubs, cleanliness of the shared vehicles, ratings associated with the shared vehicles, fuel or charging level of the shared vehicles, number of vehicles desired to create the one or more mobility hubs, distance to one or more available shared vehicles, and user subscription associated with the one or more shared vehicle service providers.
11. The system of paragraph 1, wherein the processor is further configured to reserve at least one of shared vehicle in at least one of the one or more mobility hubs.
12. The system of paragraph 11, wherein the shared vehicles are selected from the group consisting of shared bicycles, shared e-bicycles, shared kick scooters, shared scooters, and shared automobiles.
13. The system of paragraph 9, wherein the processor is further configured to limit the area of interest for the user based on a starting and destination request by the user.
14. A method for generating a routing graph for a user, the method comprising:
   defining a geographic area of interest for the user;
   identifying a cluster of shared vehicles for one or more mobility hubs in the area of interest;
   creating the routing graph from an edge of the one or more mobility hubs based on one or more preferences of the user; and
   providing the routing graph to a routing engine for calculating an intermodal route.
15. The method of paragraph 12, further comprising updating the routing graph with one or more additional mobility hubs based on updated location and availability data of a plurality of shared vehicles forming the one or more additional mobility hubs.
16. The method of paragraph 12, further comprising identifying the cluster based on transient location of one or more shared vehicles located in the area of interest.
17. The method of paragraph 12, further comprising identifying the cluster of the one or more mobility hubs based on a fixed area size, a line of sight between a plurality of shared vehicles, a grid level of a plurality of shared vehicles, or a combination thereof.
18. A computer program product comprising at least one non-transitory computer-readable storage medium having stored thereon computer-executable program code instructions which when executed by a computer, cause the computer to carry out operations for generating a routing graph for a user, the operations comprising:
   defining a geographic area of interest for the user;
   identifying a cluster of shared vehicles for one or more mobility hubs in the area of interest;
   creating the routing graph from an edge of the one or more mobility hubs based on one or more preferences of the user; and
   providing the routing graph to a routing engine for calculating an intermodal route.
19. The computer program product according to paragraph 18, further comprising updating the routing graph with one or more additional mobility hubs based on updated location and availability data of a plurality of shared vehicles located within the one or more additional mobility hubs.
20. The computer program product according to paragraph 18, further comprising identifying the cluster based on transient location of one or more shared vehicles located in the area of interest.

Embodiments of the present application may provide a computer program product including at least one non-transitory computer-readable storage medium having computer-executable program code instructions stored therein. The computer-executable program code instructions when executed by a computer, cause the computer to carry out operations for generating a routing graph for a user. The operations including: defining a geographic area of interest for the user; identifying a cluster of shared vehicles for one or more mobility hubs in the area of interest; creating the routing graph from an edge of the one or more mobility hubs based on one or more preferences of the user; and provide the routing graph to a routing engine for calculating an intermodal route.

Also, a computer program product may be provided. For example, a computer program product comprising instructions which, when the program is executed by a computer, cause the computer to carry out the steps described herein.

### BRIEF DESCRIPTION OF THE DRAWINGS

Having thus described example embodiments of the application in general terms, reference will now be made to the accompanying drawings, which are not necessarily drawn to scale, and wherein:
FIG. 1A is a diagram of a system for generating a routing graph for a user, according to one embodiment;
FIG. 1B is a diagram of a transportation database, according to one embodiment;
FIG. 2 is a diagram of the components of a routing platform, according to one embodiment;
FIG. 3 is a flowchart of a process for generating a routing graph, according to one embodiment;
FIG. 4 illustrates a diagram of an exemplary user interface capable of identifying shared vehicle mobility hubs, according to one embodiment;
FIG. 5 is a diagram of user interface capable of identifying shared vehicle mobility hubs adjacent to a user location, according to one embodiment;
FIGs. 6A-6D are diagrams of user interfaces capable identifying shared vehicles or shared vehicle services in a geographic area, according to one embodiment;
FIGs. 7A-7B are illustrated diagrams for graphing routes for a user from a starting point to a destination, according to one embodiment;
FIG. 8 is a diagram of hardware that can be used to implement an embodiment of the application;
FIG. 9 is a diagram of a chip set that can be used to implement an embodiment of the application; and
FIG. 10 is a diagram of a mobile terminal (e.g., mobile computer) that can be used to implement an embodiment of the application.

### DETAILED DESCRIPTION

Some embodiments of the present application will now be described more fully hereinafter with reference to the accompanying drawings, in which some, but not all, embodiments of the application are shown. Indeed, various embodiments of the application may be embodied in many different forms and should not be construed as limited to the embodiments set forth herein; rather, these embodiments are provided so that this disclosure will satisfy applicable legal requirements. Like reference numerals refer to like elements throughout. Also, reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced item. Moreover, various features are described which may be exhibited by some embodiments and not by others. Similarly, various requirements are described which may be requirements for some embodiments but not for other embodiments. As used herein, the terms "data," "content," "information," and similar terms may be used interchangeably to refer to data capable of being displayed, transmitted, received and/or stored in accordance with embodiments of the present application. Thus, use of any such terms should not be taken to limit the spirit and scope of embodiments of the present application.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

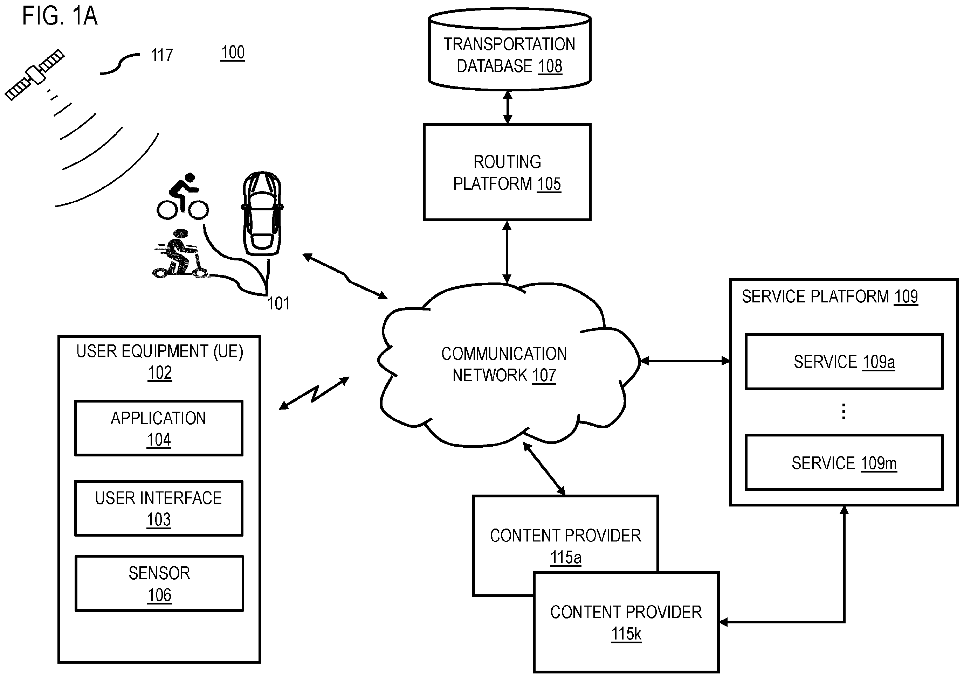

A method, a system, and a computer program product are provided herein in accordance with an example embodiment for generating a routing graph for a user. There is a need for method and a system for generating a routing graph for a user based on user preference(s) and aggregated historical data about shared vehicles for one or more locations. The locations may be limited to an area relevant to a user, and not necessarily encompassing a full shared vehicle service area. While it is not necessary for the system 100 (FIG. 1A) to aggregate all available history, it is preferable to at least accumulate data for the last few days of the week, last few weeks, last few months, last few seasons, etc. The system 100 is configured to analyze locations where each shared vehicle was returned, duration of stay at the locations, or combinations thereof. Attributes of the shared vehicle can also be collected. For example, attributes include determining a charging level of a shared vehicle to ensure the shared vehicle in a given area has sufficient charging, or is not consistently below a percentage of battery charge, such as below 10% of battery charge. Other attributes include the type of shared vehicle such as a shared bicycles, shared e-bicycles, shared kick scooters, shared scooters, and shared automobiles, etc.

FIG. 1A exemplarily illustrates a schematic diagram of system 100 that employs an approach for generating a routing graph for a user for implementing example embodiments described herein. The system 100 includes user equipment (UE) or a user device 102, which may be in communication with a routing platform 105, over a communication network 107. The communication network 107 may be wired, wireless, or any combination of wired and wireless communication networks, such as cellular, Wi-Fi, internet, local area networks, or the like. The user equipment 102 may be an in-vehicle navigation system, such as an infotainment system, a personal navigation device (PND), a portable navigation device, a cellular telephone, a smart phone, a personal digital assistant (PDA), a watch, a camera, a computer, a workstation, and/or other device that can perform navigation-related functions, such as digital routing graph and map display. An end user can use the user equipment for navigation and map functions such as guidance and map display, for example, and for determination of one or more personalized routing graphs, according to some example embodiments.

In some example embodiments, the user equipment 102 may be configured to provide route guidance and navigation related functions to the user of a shared vehicle. The user may drive a shared vehicle that may be rented out by a shared vehicle service provider. In an embodiment, the user may use a public transportation vehicle for a one or more legs of a route towards his/her destination, and the user may use one or more shared vehicles rented out by one or more shared vehicle service providers for remaining of the route toward the destination.

In other embodiments, a free-floating shared vehicle scenario is provided. In this example, a user can pick up or drop off their shared vehicle at practically any location within a service area and generally does not need to pick up or drop off the shared vehicle at a designated station. In certain embodiments, operators define a service area which can encompass a large portion of a city where users are allowed to pick up or drop off their shared vehicle, subject to parking regulations implemented by local authorities. For example, certain areas may be excluded from pick up or drop off locations such as "no parking" areas, areas designated by local municipalities for a particular vehicle type on a sidewalk, etc. Further, shared vehicle can be moved by the users and when there is enough demand for shared vehicles, they can be organically distributed within a space. In certain examples, adjustments are made by operators be sending personnel to move or relocated some vehicles from one location to another. For example, this can be done when a shared vehicle is left at an area where demand is not expected or below a satisfactory level.

In another embodiment, the user may use one or more shared vehicles for a first leg of a route towards his/her destination and the user may use a public transportation vehicle for a final leg of the route towards the destination. In some embodiments, the user may use a combination of one or more public transportation vehicles, and/or one or more shared vehicles based on his/her preferences on a route towards the destination. The routing graph provided by the system 100 may be transmitted to the user. In some embodiments, the routing graph provided by the system 100 may be transmitted to the shared vehicle service provider and the shared vehicle service provider may provide a routing graph to the user of the shared vehicle. In some embodiments, the user equipment 102 may be a handheld device or a device installed in the vehicle and may be configured to provide routing graph to the user. The user equipment 102 may also include an image capturing device, such as a camera. The user equipment 102 may include a mobile computing device such as a laptop computer, tablet computer, mobile phone, smart phone, navigation unit, personal data assistant, watch, camera, or the like. Additionally, or alternatively, the user equipment 102 may be a fixed computing device, such as a personal computer, computer workstation, kiosk, office terminal computer or system, or the like. The user equipment 102 may be configured to access the routing platform 105 via a processing component through, for example, a user interface of a mapping application, such that the user equipment 102 may provide a routing graph and navigational assistance to the user among other services provided through access to the routing platform 105.

As exemplarily illustrated, the routing platform 105 may also include a transportation database 108, which may include node data, road segment data or link data, point of interest (POI) data, posted signs related data or the like. The transportation database 108 may also include cartographic data, routing data, and/or maneuvering data. According to some example embodiments, the road segment data records may be links or segments representing roads, streets, or paths, as may be used in calculating a route or recorded route information for determination of one or more personalized routes. The node data may be end points corresponding to the respective links or segments of road segment data. The road link data and the node data may represent a road network, such as used by vehicles, for example, cars, trucks, buses, motorcycles, and/or other entities. Optionally, the transportation database 108 may contain path segment and node data records or other data that may represent pedestrian paths or areas in addition to or instead of the vehicle road record data, for example. The road/link segments and nodes can be associated with attributes, such as geographic coordinates, street names, address ranges, speed limits, turn restrictions at intersections, and other navigation related attributes, as well as POIs, such as fueling stations, hotels, restaurants, museums, stadiums, offices, auto repair shops, buildings, stores, parks, etc. The transportation database 108 can include data about the POIs and their respective locations in the POI records. The transportation database 108 may additionally include data about places, such as cities, towns, or other communities, and other geographic features such as bodies of water, mountain ranges, etc. Such place or feature data can be part of the POI data or can be associated with POIs or POI data records (such as a data point used for displaying or representing a position of a city). In addition, the transportation database 108 can include event data (e.g., traffic incidents, construction activities, scheduled events, unscheduled events, etc.) associated with the POI data records or other records of the transportation database 108 associated with the routing platform 105. The transportation database 108 may additionally include types of shared vehicles, brands of shared vehicles, directory of different shared vehicle service providers, data related to service boundaries catered by the different shared vehicle service providers, location of off-street parking spots, capacity of the off-street parking spots, parking options available at the off-street parking spots, data about traffic regulations, speed limits, posted traffic signs, posted speed limit signs, heading data and the like. In some example embodiments, the transportation database 108 may additionally include navigation routes within a service boundary, intermodal connections available within a service boundary, parking options at on-street parking spots within a service boundary, etc.

A content provider such as a map developer may maintain the routing platform 105. In some example embodiments, a shared vehicle service provider may have access to the routing platform 105 for accessing and/or publishing location-related data associated to availability of shared vehicles, types and brands of the available shared vehicles, location of mobility hubs, intermodal connections available from mobility hubs, etc. By way of example, the map developer can collect geographic data to generate and enhance the routing platform 105. There can be different ways used by the map developer to collect data. These ways can include obtaining data from other sources, such as municipalities or respective geographic authorities. In addition, the map developer can employ field personnel to travel by vehicle along roads throughout the geographic region to observe features and/or record information about them, for example. Crowdsourcing of geographic map data can also be employed to generate, substantiate, or update map data. For example, sensor data from a plurality of data probes, which may be, for example, vehicles traveling along a road network or within a venue, may be gathered and fused to infer an accurate map of an environment in which the data probes are moving. Such sensor data may be updated in real time such as on an hourly basis, to provide accurate and up to date map data. The sensor data may be from any sensor that can inform a map database of features within an environment that are appropriate for mapping. For example, motion sensors, inertia sensors, image capture sensors, proximity sensors, LIDAR (light detection and ranging) sensors, ultrasonic sensors etc. The gathering of large quantities of crowd-sourced data may facilitate the accurate modeling and mapping of an environment, whether it is a road segment or the interior of a multilevel parking structure. Also, remote sensing, such as aerial or satellite photography, can be used to generate map geometries directly or through machine learning as described herein.

The transportation database 108 of the routing platform 105 may be a master map database stored in a format that facilitates updating, maintenance, and development. For example, the master map database or data in the master map database can be in an Oracle spatial format or other spatial format, such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data may be compiled (such as into a platform specification format (PSF) format) to organize and/or configure the data for performing navigation-related functions and/or services, such as route calculation, route guidance, map display, speed calculation, distance and travel time functions, and other functions, by a navigation device, such as by the user equipment 102, for example. Further, data may be compiled relating to routing graph along different road segments within a geographic area of interest to the user or service area defined in the transportation database 108, where a routing graph recommendation may be generated in dependence of time of day, day of week, season of the year, special events, service boundaries of the other shared vehicle service providers, etc. The navigation-related functions can correspond to vehicle navigation, pedestrian navigation, navigation to a favored location, such as home or work, or other types of navigation. While example embodiments described herein generally relate to vehicular travel, such as shared vehicle travel, example embodiments may be implemented for bicycle travel along bike paths and bike rack/parking availability, boat travel along maritime navigational routes including dock or boat slip availability, off-street parking of vehicles, etc. The compilation to produce the end user databases can be performed by a party or entity separate from the map developer. For example, a customer of the map developer, such as a navigation device developer or other end user device developer, can perform compilation on a received map database in a delivery format to produce one or more compiled navigation databases.

In some embodiments, the routing platform 105 may be a master geographic database configured at a server side, but in alternate embodiments, a client side routing platform 105 may represent a compiled navigation database that may be used in or with end user devices (e.g., user equipment 102) to provide a routing graph, navigation, speed adjustment and/or map-related functions. For example, the routing platform 105 may be used with the end user device, that is, the user equipment 102 to provide the user with navigation features. In such a case, the routing platform 105 can be downloaded or stored on the user equipment 102 which can access the routing platform 105 through a wireless or a wired connection, over the network 107.

In one embodiment, the user device or the user equipment 102 can be used to perform navigation-related functions, such as providing a digital routing graph and map display. A user may be recommended by the routing platform 105 on a user interface 103 of the user equipment 102 about intermodal navigation routes to the destination of the user, availability of mobility hubs en route the destination, availability of routing graphs between edges of mobility hubs, etc. In some example embodiments, the user may be navigating to a destination that may be a defined location with an address, a Point of Interest (POI), an area of a city, a restricted transit area (for example, no parking, only electric vehicle, no diesel vehicle area, etc.) or a destination of the above inside the restricted transit area. The user may be notified about availability of parking spots in the road links within the service boundaries, parking estimation times in the available parking spots in the road links, parking options in the available parking spots, and the like. The user equipment 102 may allow performing a reservation of a shared vehicle rented out by a shared vehicle service provider prior to using the shared vehicle. The shared vehicle service provider may be notified by the routing platform 105 about reservation of the shared vehicle by the user, about start of allotted time of reservation of the shared vehicle, and about parking of the shared vehicle at a parking spot in the vicinity of a mobility hub by the user. In some embodiments, the user of the shared vehicle may use the user equipment 102 for navigation and map functions such as guidance and map display. The user equipment 102 may include an application 104, for example, a mapping application with the user interface 103 that may enable the user to access the routing platform 105 for availing the functions disclosed above.

In FIG. 1A, vehicle 101 can utilize routing platform 105. The vehicle 101 may be a shared vehicle rented by the user from a shared vehicle service provider. The system 100 includes a user equipment 102, including an application 104 with a user interface 103 for accessing one or more map and navigation related functions. The user equipment 102 may also include one or more sensors 106 such as a camera, an acceleration sensor, a gyroscopic sensor, a LIDAR sensor, a proximity sensor, a motion sensor and the like. The sensors 106 may, primarily be, for determining position of the vehicle 101 and the sensors 106 may be built-in or embedded into or within interior of the user equipment 102. In some embodiments, the user equipment 102 uses communication signals for position determination. The user equipment 102 may receive location data from a positioning system, a Global Navigation Satellite System (GNSS), such as a Global Positioning System (GPS), Galileo, Globalnaya Navigazionnaya Sputnikovaya Sistema (GLONASS), BeiDou Navigation Satellite System (BDS), etc., cellular tower location methods, access point communication fingerprinting, such as Wi-Fi/Bluetooth based radio maps, or the like. The data collected by the sensors 106 may be used to gather information related to an environment of the vehicle 101. The environment of the vehicle 101 may include other shared vehicles in use or parked in the area. In some embodiments, the vehicle 101 may have sensors 106 positioned on or within and the sensors 106 may provide data indicating a location of the vehicle 101. Vehicle data, also referred to herein as "probe data", may be collected by any device capable of determining the necessary information, and providing the necessary information to a remote entity. The user equipment 102 is one example of a device that can function as a probe to collect probe data of the vehicle 101.

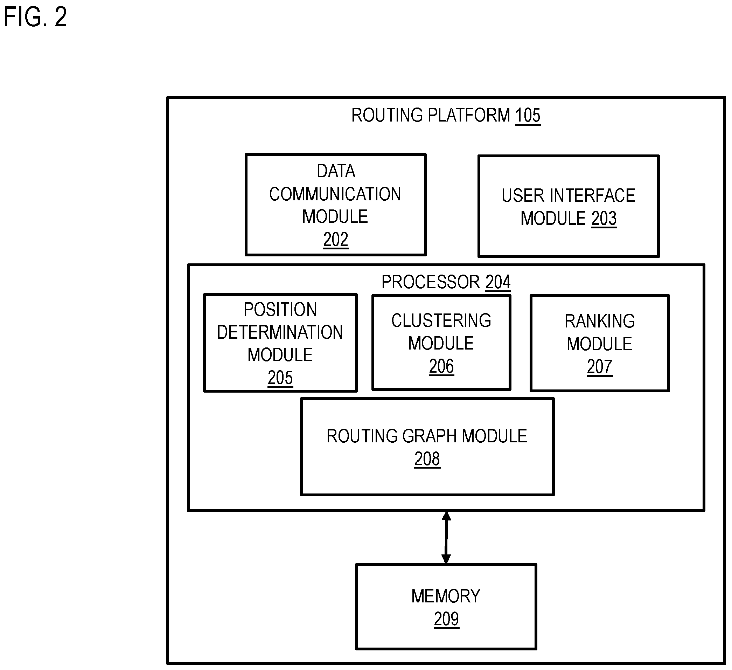

Probe data collected by the user equipment 102 may be representative of the location of the vehicle 101 at a respective point in time and may be collected while the vehicle 101 is traveling along a route. While probe data is described herein as being vehicle probe data, example embodiments may be implemented with pedestrian probe data, marine vehicle probe data, or nonmotorized vehicle probe data (e.g., from bicycles, scooters, skateboards, horseback, etc.). According to the example embodiment described below with the probe data being from motorized vehicles traveling along roadways, the probe data may include, without limitation, location data, (e.g. a latitudinal, longitudinal position, and/or height, GNSS coordinates, proximity readings associated with a radio frequency identification (RFID) tag, or the like), rate of travel, (e.g. speed), direction of travel, (e.g. heading, cardinal direction, or the like), device identifier, (e.g. vehicle identifier, user identifier, or the like), a time stamp associated with the data collection, or the like. The user equipment 102, may be any device capable of collecting the aforementioned probe data. In one example, sensors may also be installed at the parking locations and on the road links within an area or within service area defined by a service boundary. The sensors installed at the parking spots and on the road links may serve to control traffic, determine on-street parking availability, facilitate speed control of the vehicles, and the like. The sensors installed in the shared vehicles or in the user equipment in the shared vehicles may transmit the sensor data to one or more shared vehicle service providers operating the shared vehicles. The sensors, such as, GNSS based sensors in a shared vehicle, may report location of the shared vehicle via wireless or cellular networks to a shared vehicle service provider to whom the shared vehicle belongs. The routing platform 105 may query the shared vehicle service providers via an API to determine locations of the shared vehicles available at any given time. Using the location data from the user equipment 102 of the vehicle and the queried location data from the shared vehicle service providers, the routing platform 105 may create spatial clusters of the available shared vehicles. The routing platform 105, further may filter the aggregations of the available shared vehicles based on generic or personalized criteria and generates routing graphs in the vicinity of a mobility hub and proceed further towards a destination using a shared vehicle of his/her choice from a mobility hub. In an embodiment, multiple shared vehicles in a mobility hub may be co-located at a location within a geographical region. In some example embodiments, where shared vehicles in a mobility hub are within a cluster radius, there is no major physical border, such as, a river or any physical element, between the shared vehicles of the mobility hub. In this embodiment, the user can move from a shared vehicle in a mobility hub to another shared vehicle in the mobility hub easily without limitation on the mode of transport that is being used. Furthermore, the user can move from a first mobility hub to a second mobility hub due to non-availability of a shared vehicle in the first mobility hub without hindrance. The processing of the sensor data to generate routing graphs may be performed by the processor 204 including multiple modules 205, 206, 207 and 208 of the routing platform 105 exemplarily illustrated in FIG. 2.

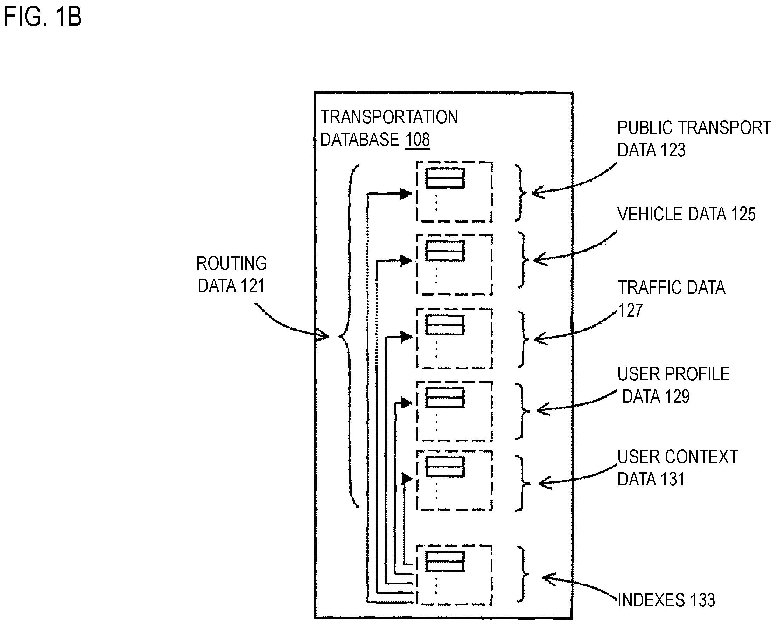

FIG. 1B is a diagram of the transportation database 108, according to one embodiment. In one embodiment, routing graph, vehicle information, an intermodal vehicle availability model, and/or any other information used or generated by the system 100 with respect to optimizing intermodal route computations based on routing data 121 stored in the transportation database 108.

In one embodiment, the routing data 121 include modes of transport data 123, modes of transport availability data 125, traffic data 127, user profile data 129, user context data 131, indexes 133 of the routing data, etc. In one embodiment, the modes of public transport data 123 can include any public transport data and vehicle data used by the routing platform 105. The public transport data includes, but not limited to public transport type data, public transport schedule data, public transport route and stop data, real-time public transport trajectory data, etc. retrieved from transit agencies, public transportation operators, etc. The vehicle data includes, but not limited to vehicle type data, vehicle ownership data, vehicle route and step data, real-time vehicle trajectory data, parking instance data, timestamp information for the parking instance data, etc. for estimating a riding point and an estimated arrival time for a vehicle to the riding point and then the destination.

The public transport data format may be in General Transit Feed Specification (GTFS), REST/XML, or other industry standards for publishing transportation network and schedule data. In one embodiment, the public transport include on-demand services (e.g., taxis, shared vehicles, etc.) and fixed-route services such as city buses, trolleybuses, trams (or light rail) and passenger trains, rapid transit (metro/subway/underground, etc.), ferries, airlines, coaches, intercity rail, etc.

In one embodiment, the modes of vehicle data 125 includes shared vehicle availability data for one or more geographic areas, a shared vehicle availability pattern for each of the one or more geographic areas, an intermodal vehicle availability model, etc. By way of examples, the one or more modes of transport include a car, a bicycle, an electric bicycle, a scooter, a mini scooter, a public transport, a ride hailing service, etc. In one embodiment, a boundary of the one or more geographic areas is determined by a block size, a shared vehicle density, a geographical district, a geofence, user criteria, or a combination thereof.

In one embodiment, the shared vehicle availability data includes historical shared vehicle availability data collected from the one or more geographic areas over a period time, and the shared vehicle availability data is associated with one or more modes of transport that can be used to generate an intermodal route. In one embodiment, the shared vehicle availability pattern indicated by a metric indicating a count of shared vehicles available per said each geographic area.

In one embodiment, the intermodal vehicle availability model is generated before receiving a request to generate the intermodal route and based on the shared vehicle availability pattern, and the intermodal vehicle availability model indicates a possible combination of the one or more modes of transport for said each geographic area.

In one embodiment, the traffic data 127 includes, but not limited to, travel speeds, congestions, detours, vehicle types and volumes, accidents, road conditions, road works, etc. on specific road segments.

In one embodiment, the user profile data 129 (FIG. 1B) includes, but not limited to, the name, name, login named, screen named, nicknamed, handle names, home addresses, email addresses, government identification numbers, operator license/credential types (motorcycle, regular passenger vehicle, commercial vehicle, etc.), vehicle registration plate numbers, face, fingerprints, handwriting, credit card numbers, digital identities, date of birth, age, birthplace, genetic information (e.g., gender, race, etc.), telephone numbers, marriage status/records, criminal records, purchase records, financial data, activity records, employment records, insurance records, medical records, political and non-political affiliations, preferences (e.g., POIs), calendar data, driving history data, vehicle sharing data, etc. of the driver/requesting user.

In one embodiment, the user context data 131 includes, but not limited to, a destination of the requesting user, a type of the destination of the user, a proximity of the user location to a riding point or the destination, availability of an alternate destination for the user, a number of passengers accompanying the user, weather data in the vicinity of the user, etc.

In one embodiment, the modes of transport data 123 can be used in junction with the user profile data 129 and the user context data 131 for estimating a riding point and an estimated arrival time for the user to arrive the riding point. In another embodiment, the traffic data 127 is further included for estimating the riding point and the estimated arrival time for the user to arrive the riding point.

In one embodiment, the modes of transport availability data 125 can be used in junction with the user profile data 129 and the user context data 131 to generate the intermodal route. In another embodiment, the traffic data 127 is further included to generate the intermodal route.

More, fewer or different data records can be provided in the transportation database 108. One or more portions, components, areas, layers, features, text, and/or symbols of the routing data records in the transportation database 108 can be stored in, linked to, and/or associated with one or more of the data records, such as mapping and/or navigation data). In one embodiment, the geographic data used for (or configured to be compiled to be used for mapping and/or navigation-related services, such as for route information, service information, estimated time of arrival information, location sharing information, speed sharing information, and/or geospatial information sharing, according to exemplary embodiments. For example, the geographic data can include node data records, road segment or link data records, POI data records, parking availability data records, the routing data 121, and other data records.

In exemplary embodiments, the road segment data records are links or segments representing roads, streets, or paths, as can be used in the calculated route or recorded route information. The node data records are end points corresponding to the respective links or segments of the road segment data records. The road link data records and the node data records represent a road network, such as used by vehicles, cars, and/or other entities.

The road link and nodes can be associated with attributes, such as geographic coordinates, street names, address ranges, speed limits, turn restrictions at intersections, and other navigation related attributes, as well as POIs, such as traffic controls (e.g., stoplights, stop signs, crossings, etc.), gasoline stations, hotels, restaurants, museums, stadiums, offices, automobile dealerships, auto repair shops, buildings, stores, parks, etc. Data about the POIs and their respective locations can be included in the POI data records. Data about places, such as cities, towns, or other communities, and other geographic features, such as bodies of water, mountain ranges, etc., can be includes

The transportation database 108 can be maintained by the content provider in association with the service platform 109 (e.g., a map developer). The map developer can collect driving/parking data and geographic data to generate and enhance the transportation database 108. There can be different ways used by the map developer to collect data. These ways can include obtaining data from other sources, such as municipalities or respective geographic authorities.

The transportation database 108 can be stored in a format that facilitates updating, maintenance, and development of the relevant data. For example, the data in the transportation database 108 can be stored in an Oracle spatial format or other spatial format. The Oracle spatial format can be compiled into a delivery format, such as a geographic data files (GDF) format to be compiled or further compiled to form geographic database products or databases, which can be used in end user navigation devices or systems.

The transportation database 108 can be used in or with end user devices (e.g., UEs 102) to provide navigation-related functions and provide shared vehicle information. For example, the database 108 is accessible to the UE 102 directly or via the routing platform 105. In another embodiments, the database 108 can be downloaded or stored on UE 102, such as in applications 104.

The system 100 may further include a service platform 109, which may be used to provide navigation related functions and services 109a-109m to the application 104 running on the user equipment 102. The services 109a-109m may include such as navigation functions, speed adjustment functions, traffic related updates, weather related updates, warnings and alerts, parking related services, in particular on-street or off-street parking availability services, indoor mapping services, and the like. The services 109a-109m may be provided by a plurality of content providers 115a-115k. In some examples, the content providers 115a-115k may access various APIs from the service platform 109 for implementing one or more services. In an example, the service platform 109 and the routing platform 105 may be integrated into a single platform to provide a suite of mapping and navigation related applications for OEM devices, such as the user equipment 102. The user equipment 102 may be configured to interface with the service platform 109, the content provider's services 115a-115k, and the routing platform 105 over network 107. Thus, the routing platform 105 and the service platform 109 may enable provision of cloud-based services for the user equipment 102, such as, for providing routing graph recommendations to the user of the vehicle 101 and user equipment 102.

FIG. 2 exemplarily illustrates a block diagram of the routing platform 105 that may be used to provide parking recommendations to a user in accordance with an example embodiment of the present application. In the embodiments described herein, the routing platform 105 comprises a data communication module 202, a position determination module 205, a clustering module 206, a ranking module 207, a routing graph recommendation engine 208, and a user interface module 203. In this embodiment exemplarily illustrated in FIG. 2, the position determination module 205, the clustering module 206, the ranking module 207, and the routing graph recommendation engine 208 are embodied within the processor 204. The processor 204 may retrieve computer program code instructions that may be stored in a memory 209 for execution of the computer program code instructions by the modules 202, 205, 206, 207, and 208 of the routing platform 105. The processor 204 may control the execution of the computer program code instructions by the modules 202, 205, 206, 207, and 208 of the routing platform 105. In one embodiment, the data communication module 202 communicates with the sensors 106 (FIG. 1A) and receives the sensor data, that is, location data of the vehicle 101 from the sensors 106 and location data of other shared vehicles, from the shared vehicle service providers.

In an embodiment, the sensors 106 may be installed at different locations in the road links and at garages, multi-story parking lots, underground parking lots, etc., and the sensors may periodically transmit parking availability data, traffic data, etc., to the routing platform 105 over the network 107. In some embodiments, the sensors 106 may be installed at the service boundary of a service area of a shared vehicle service provider and the sensors periodically transmit data related to the service boundary to the routing platform 105 over the network 107. In some embodiments, the service area catered by a shared vehicle service provider may be of various shapes, for example, a polygon shape, a circle, etc. In one example, the shape of the service area may be defined by road links. In other examples, the shape of the service area may be defined virtually by a geo-fence created by the shared vehicle service provider in their area of interest. In other examples, the shape of the service area may be defined by a geographic area determined by the users intended destination.

In some example embodiments, the data communication module 202 may receive information related to destination of a user of the routing graph system via the network 107. The destination of a user may be a location with a corresponding address, a point of interest, such as, home, work, school, mall, etc., an area in a geographical region, a restricted transit area or zone, such as, a no parking zone, only electric vehicle zone, no diesel zone, a destination within the restricted transit area, and the like. The data communication module 202 may also receive subscription details associated with different shared vehicle service providers from the user. The user may subscribe to one or more shared vehicle service providers. In some example embodiments, the user may be provided with some additional privileges by one or more shared vehicle service providers on the subscription. The data communication module 202 may receive user preferences from the user of the vehicle 101 regarding type of shared vehicles preferred, preferred brand of shared vehicle service provider, type of shared vehicles preferred for a selected distance, and brands of shared vehicles preferred. The data communication module 202 may suggest types of shared vehicles and brands of shared vehicles, and the user may be allowed to select from the suggested shared vehicles on the user interface 103. The user may select regular bikes over e-bikes, scooters over rollers based on their preferences. Similarly, the user may select a roller for a distance less than 2 kilometers (kms), then bikes until a distance of 4 km, and then scooters based on their preferences. Similarly, the user may be allowed to select a preferred shared bike service provider over other shared bike service providers. Similarly, the user may be allowed to select a preferred brand of bikes. The data communication module 202 also receives a number of shared vehicles that the user desires to be clustered into one or more mobility hubs. The data communication module 202, as a part of sensor data, also receives fuel or charging level of the shared vehicles.

In some embodiments, the data communication module 202 may receive battery levels of electric shared vehicles. In some embodiments, the data communication module 202 receives a value for fuel level or battery level desired in a shared vehicle from a user based on the distance the shared vehicle intends to cover using the shared vehicle. In some embodiments, the user is allowed to rank the mobility hubs based on match between the user preferences and the attributes and services provided by the mobility hubs. In such embodiments, the data communication module 202 may also receive the ranks for the mobility hubs from the user. In an embodiment, the data communication module 202 receives cluster radius of a mobility hub to be formed from the user. The cluster radius may be set by a predetermined distance specified by the user via the user equipment 102, or by the routing platform 105. The cluster radius may also be determined from learnt walking patterns of the user, i.e., a distance that the user finds acceptable to walk. The user may input the cluster radius to be less than, for example, 200 meters. That is, in the mobility hub, the shared vehicles may be located within a distance of 200 meters. The data communication module 202 may receive desired cleanliness levels in the shared vehicles from the user. The data communication module 202 may also receive ratings associated with the shared vehicles provided by other users. In some example embodiments, the data communication module 202 may receive ratings for a shared vehicle from the user after usage of the shared vehicle.

The data communication module 202 may receive number of shared vehicles available in a service area at a point in time from the shared vehicle service providers. The position determination module 205 embodied in the processor 204 may determine relative positions between the shared vehicles in the vicinity. The position determination module 205 computes the relative positions between the vehicle 101, such as a shared vehicle of the user and other shared vehicles using the location data of the shared vehicles. The position determination module 205 may determine the relative positions of the shared vehicles using beacons, GPS co-ordinates of the shared vehicles, etc. The positions and availability of the shared vehicles are obtained from the shared vehicle service providers, as the shared vehicles report their locations and the shared vehicle service providers manage availability of the shared vehicles. The position determination module 205 may select a set of relevant shared vehicles from the shared vehicles in the vicinity, within a predetermined or user defined range.

In an example embodiment, the position determination module 205 may generate a distribution profile of the shared vehicles after computing the relative positions of the shared vehicles. In an embodiment, the position determination module 205 determines position of the shared vehicles relative to the destination of a user. The position determination module 205 may also determine whether destination of the user is within at a service boundary of at least one shared vehicle service provider. The position determination module 205 may be in communication with the clustering module 206.

The clustering module 206 embodied in the processor 204 may cluster at least one shared vehicle into one or more mobility hubs based on one or more of predefined criteria, the determined relative positions between the shared vehicles, aggregated historical shared vehicle positions, and combinations thereof. Routing algorithms typically require discrete nodes, while shared vehicles continuously change their position. Therefore, the system 100 recognizes patterns over time and creates virtual clusters that discretizes shared vehicles and allows the connection to routing algorithms. Multiple routes can be calculated and displayed for the user, for which different reliability percentages may be calculated based on the likelihood of finding shared vehicle clusters. In certain embodiments, since the shared vehicles continuously change their positions, the locations at which the shared vehicles become available also change. Therefore, a free-floating shared vehicle model is provided such that the user can pick up or drop off their shared vehicle at different locations of their choosing. With the free-floating model, the user is not required to return their shared vehicle to a shared vehicle station such as a car rental facility, fixed bike rack, public transportation station, rental office, etc. Available shared vehicles can then be clustered into mobility hubs which become the nodes of the routing graph. The clustering module 206 may communicate with the data communication module 202 to query the routing graph system. The clustering module 206 may search for a combination of shared vehicles based on the predefined criteria of the user. The user preferences or criteria received by the data communication module 202 may constitute the predefined criteria. The clustering module 206 may search for, for example, 4 bikes, 4 scooters, and 4 rollers, in the geographic area of interest for the user. The clustering module 206 may, further, determine cluster radius of a mobility hub to be formed from the relative positions of the shared vehicles. The clustering module 206 may cluster the shared vehicles that satisfy the cluster radii defined by the user. In some embodiments, the clustering module 206 may cluster the shared vehicles that satisfy the cluster radii defined by the routing graph module 208. In some example embodiments, the clustering module 206 may cluster the shared vehicles based on the geographic area of interest of the user, or a service boundary defined by at least one shared vehicle service provider. In certain embodiments, the clustering module 206 clusters the shared vehicles when the destination of the user is within the service boundary of at least one shared vehicle service provider.

The clustering module 206 may cluster the shared vehicles within a predetermined range of the destination of the user, that is, the clustering module 206 may cluster the shared vehicles that can cater to reaching the destination via a shortest path, for reaching the destination via a fastest path, etc. The clustering module 206 may cluster the shared vehicles based one or more of user preferences, aggregated historical shared vehicle positions, or combinations thereof, received by the data communication module 202. In an embodiment, the clustering module 206 may cluster the shared vehicles into one or more mobility hubs based on user preferences and historical shared vehicle positions. The clustering module 206 may, further, search for shared vehicles that are bookable since the user of the mobility hub may want to secure a shared vehicle at the start of his/her journey towards a destination. The user preferences constitute the personalized criteria to form mobility hubs. The predefined criteria may also be a generalized criteria based on zoning within service boundaries, time of day, weather conditions, etc. For example, if navigation route to a destination of the user passes via a bike only zone, the clustering module 206 clusters shared bikes within the bike only zone irrespective of the user preferences. The clustering module 206 may cluster bikes, scooters, etc., to form mobility hubs in the vicinity of the business district since usage of these types of shared vehicles is relatively high. The clustering module 206, in an embodiment, may update the cluster dynamically based on changes in the user preferences and/or aggregated historical shared vehicle position data.

The ranking module 207 embodied within the processor 204 may rank one or more mobility hubs based on one or more hub rating parameters. The hub rating parameters may gauge the quality of services provided by a mobility hub to the user. In some embodiments, the ranking module 207 may rank the mobility hub based on estimated time of arrival of the user at a destination on using the mobility hub, distance between the destination and the shared vehicle in the mobility hub, and fit of the mobility hub with the user preferences. In some embodiments, the ranking module 207 may rank the mobility hub based on the number of alternative shared vehicles available to the user at the location of the mobility hub, thereby reducing a risk of finding a broken vehicle on arrival at the mobility hub, and a risk to have a reservation of a shared vehicle with a shared vehicle service provider expired, based on traffic conditions in the vicinity of the mobility hub. In some embodiments, the ranking module 207 may rank a mobility hub based on a minimum number of available shared vehicles of a given type, in cases where the user of a shared vehicle may be accompanied by other users who may also require an available shared vehicle at the mobility hub. A minimum number of available shared vehicles may be determined using the occupancy sensors in the shared vehicle. For example, three passengers arriving in a shared vehicle to a mobility hub may require three rental bicycles to continue with the journey to the final destination and the ranking module 207 may rank the mobility hub based on the availability of three rental bicycles of preferred brands and preferred bicycle rental service providers to the three passengers.

In some example embodiments, the ranking module 207 may rank the mobility hub based on cluster radius of the mobility hub for the applied demand and convenience of use of the mobility hub. The ranking module 207 may rank multiple mobility hubs in a geographical region based on match with preferences of a user. A high ranked mobility hub is a mobility hub that has a maximum match to the user preferences, or the mobility hub has a high percentage of being present and reliable based on historical shared vehicle position data. The ranking module 207 may generate a list of the rankings of the mobility hubs. The ranking module 207 may, in some example embodiment, dynamically update the rank of a dynamically updated mobility hub based on the hub rating parameters. In some example embodiments, the ranking module 207 may compare the ranks provided by the user with the ranks provided by the ranking module 207 and may award final ranks to the mobility hubs. In some example embodiments, the ranking module 207 may rank or rate a user of the shared vehicle based on his interactions with the shared vehicle and the routing platform 105.

The routing graph module 208 embodied within the processor 204 may generate routing graph recommendation for a user to reach their intended destination. The routing graph module 208 may suggest a user using a shared vehicle to park his/her personal vehicle in the vicinity of a mobility hub and continue beyond using a shared vehicle from the mobility hub. In an embodiment, where the vehicle 101 is a bike or a scooter, the bike or the scooter can be left at the mobility hub and another shared vehicle can be accessed from the same mobility hub. In such embodiments, the routing graph module 208 may guide the user of the bike or the scooter in parking the bike or the scooter at the mobility hub itself and suggest him/her to access a shared vehicle from the mobility hub of his/her personal choice. In embodiments where the vehicle 101 is a car, the routing graph module 208 may guide the user of the shared car to leave the car and navigate, for example, by walking towards a shared vehicle in the mobility hub.

In some example embodiments, the routing graph module 208 may compute one or more intermodal navigation routes between the ranked mobility hubs and a destination of the user, based on aggregated historical shard vehicle locations. The routing graph module 208 may compute static intermodal navigation routes. In an embodiment, the routing graph module 208 may alter the computed intermodal navigation routes dynamically based on the updated location and/or rankings of the mobility hubs. The routing graph module 208 may recommend one or more intermodal navigation routes to the destination of the user taking advantage of the personalized mobility hubs. The routing graph module 208 helps the user to select a most suitable intermodal navigation route from the recommended intermodal navigation routes. The intermodal navigation routes may include a navigation route to a destination, navigation route (by walk) from the a first location to a shared vehicle in a mobility hub, and variations thereof.

In some example embodiments, the routing graph module 208 may be configured to dynamically compute an intermodal navigation route towards the destination of the user via a next high ranked mobility hub. The routing graph module 208 may recommend the computed alternative navigation routes for the user to select. In some example embodiments, the routing graph module 208 may select an alternative or second best intermodal navigation route and dynamically re-route the user towards his/her destination. In cases the user is using public transportation to navigate to the destination and the user had previously subscribed to services of one or more shared vehicle service providers, the routing graph module 208 may suggest the user to change to a shared vehicle and navigate to the destination leveraging mobility hubs en-route. The routing graph module 208 may provide the user of the public transportation vehicle with the incentives he/she gains on changing to a shared vehicle beyond a point in the journey. The routing graph module 208 may receive the locations of the dynamically formed mobility hubs from the clustering module 206 to generate the routing graph recommendation and the intermodal navigation routes. In some example embodiments, the routing graph module 208 may use statistical models, machine learning models, etc., to generate the routing graph data and the intermodal navigation routes. The routing graph module 208 may also receive the destination of the user and location and attributes of the vehicle 101 from the data communication module 202 to generate the parking recommendation data and compute the intermodal navigation routes. In an embodiment, the routing graph module 208 may recommend the user with intermodal navigation routes based on availability of public transport or last mile connectivity of the destination of the user from a mobility hub.

The user interface module 203 may receive the user preferences from the user on the user interface 103 of the user equipment 102. The user interface module 203 may receive destination information of the user from the user on the user interface 103 of the user equipment 102. The user interface module 203 may receive a selection of intermodal navigation route from the user from a list of recommended intermodal navigation routes on the user interface 103 of the user equipment 102. The user interface module 203 may receive ranks associated with the mobility hubs from the user on the user interface 103 of the user equipment 102. In some example embodiments, the user interface module 203 may receive a request for reservation or booking for a shared vehicle at an adjacent mobility hub on the user interface 103 of the user equipment 102. The user interface module 203 may notify the user via the user interface 103 of the user equipment 102 about upcoming reservation of a shared vehicle at an approaching mobility hub. The user interface module 203 may be configured to update the rendered recommendations on receiving control instructions from the processor 204.

The processor 204 may be embodied in a number of different ways. For example, the processor 204 may be embodied as one or more of various hardware processing means such as a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor 204 may include one or more processing cores configured to perform independently. A multi-core processor may enable multiprocessing within a single physical package. Additionally, or alternatively, the processor 204 may include one or more processors configured in tandem via the bus to enable independent execution of instructions, pipelining and/or multithreading. Additionally, or alternatively, the processor 204 may include one or processors capable of processing large volumes of workloads and operations to provide support for big data analysis.

In an example embodiment, the processor 204 may be in communication with a memory 209 via a bus for passing information among components of the system 100. The memory 209 may be non-transitory and may include, for example, one or more volatile and/or non-volatile memories. In other words, for example, the memory 209 may be an electronic storage device (for example, a computer readable storage medium) comprising gates configured to store data (for example, bits) that may be retrievable by a machine (for example, a computing device like the processor 204). The memory 209 may be configured to store information, data, content, applications, instructions, or the like, for enabling the apparatus to carry out various functions in accordance with an example embodiment of the present application. For example, the memory 209 could be configured to buffer input data for processing by the processor 204. As exemplarily illustrated in FIG. 2, the memory 209 could be configured to store instructions for execution by the processor 204. As such, whether configured by hardware or software methods, or by a combination thereof, the processor 204 may represent an entity (for example, physically embodied in circuitry) capable of performing operations according to an embodiment of the present application while configured accordingly. Thus, for example, when the processor 204 is embodied as an ASIC, FPGA or the like, the processor 204 may be specifically configured hardware for conducting the operations described herein. Alternatively, as another example, when the processor 204 is embodied as an executor of software instructions, the instructions may specifically configure the processor 204 to perform the algorithms and/or operations described herein when the instructions are executed. However, in some cases, the processor 204 may be a processor specific device (for example, a mobile terminal or a fixed computing device) configured to employ an embodiment of the present application by further configuration of the processor 204 by instructions for performing the algorithms and/or operations described herein. The processor 204 may include, among other things, a clock, an arithmetic logic unit (ALU) and logic gates configured to support operation of the processor 204.

In some embodiments, the processor 204 may be configured to provide Internet-of-Things (IoT) related capabilities to users of the system 100 disclosed herein. The IoT related capabilities may in turn be used to provide smart city solutions by providing big data analysis, and sensor based data collection by using the cloud based routing platform 105 for providing routing graphs and navigation services. The environment may be accessed using the user interface module 308 of the routing platform 105 disclosed herein. The user interface module 203 may provide an interface for accessing various features and data stored in the routing platform 105.

In some embodiments, the routing platform 105 may be configured to provide a repository of algorithms for implementing a plurality of location based services for navigation systems. For example, the routing platform 105 may include algorithms related to geocoding, routing (multimodal, intermodal, and unimodal), machine learning in location based solutions, natural language processing algorithms, artificial intelligence algorithms, parking prediction algorithms, parking time prediction algorithms, and the like. The routing platform 105 may employ, for example, hierarchical clustering, k-means algorithm (centroid models), DBSCAN algorithm, density based OPTICS algorithm and graph-based models. The data for different modules of the routing platform 105 may be collected using a plurality of technologies including but not limited to drones, sensors, connected cars, cameras, probes, chipsets and the like.. As noted above, the routing platform 105 may be embodied by the processing component 204. However, in some embodiments, the routing platform 105 may be embodied as a chip or chip set. In other words, the routing platform 105 may comprise one or more physical packages (for example, chips) including materials, components and/or wires on a structural assembly (for example, a baseboard). The structural assembly may provide physical strength, conservation of size, and/or limitation of electrical interaction for component circuitry included thereon. The routing platform 105 may therefore, in some cases, be configured to implement an example embodiment of the present application on a single "system on a chip." As such, in some cases, a chip or chipset may constitute a means for performing one or more operations for providing the functionalities described herein.

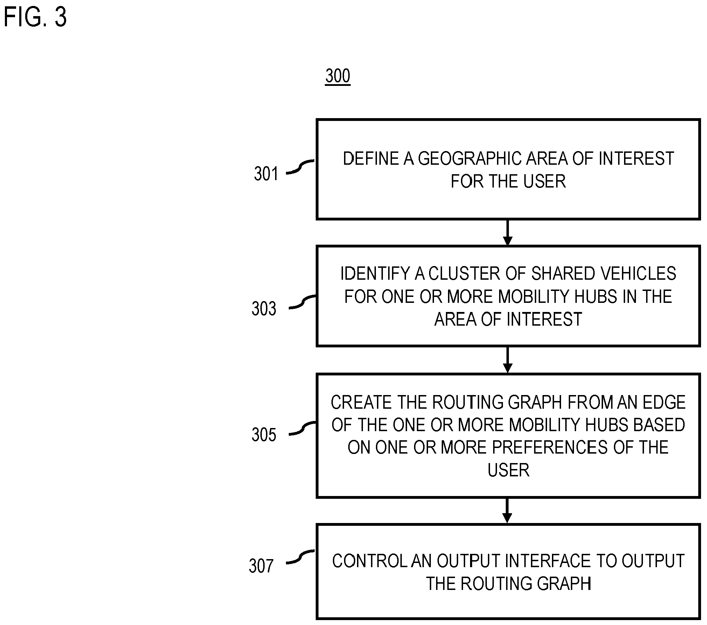

The user interface 103 of the user equipment 102 may in turn be in communication with the processor 204 to provide output to the user and, in some embodiments, to receive an indication of a user input. In some example embodiments, the system 100 may include a user interface 103 that communicates with the processor 204 and displays input and/or output of the routing platform 105. As such, the user interface 103 may include a display and, in some embodiments, may also include a keyboard, a mouse, a joystick, a touch screen, touch areas, soft keys, one or more microphones, a plurality of speakers, or other input/output mechanisms. In one embodiment, the processor 204 may comprise user interface circuitry configured to control at least some functions of one or more user interface elements such as a display and, in some embodiments, a plurality of speakers, a ringer, one or more microphones and/or the like. The processor 204 and/or user interface circuitry comprising the processor 204 may be configured to control one or more functions of one or more user interface elements through computer program instructions (for example, software and/or firmware) stored on a memory accessible to the processor 204 (for example, memory device 209, and/or the like). In some example embodiments, the processor 204 may be configured to generate a provide a method for identifying a cluster of shared vehicles for one or more mobility hubs in the area of interest; and create the routing graph from an edge of the one or more mobility hubs based on one or more preferences of the user as will be discussed in conjunction with FIG. 3 as below.

FIG. 3 exemplarily illustrates a method for generating a routing graph for a user, in accordance with an example embodiment. It will be understood that each block of a flow diagram 300 of the method may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory 209 of an apparatus, such as the user equipment 102, or the routing platform 105, employing an embodiment of the present application and executed by a processor 204 of the apparatus. As will be appreciated, any such computer program instructions may be loaded onto a computer or other programmable apparatus (for example, hardware) to produce a machine, such that the resulting computer or other programmable apparatus implements the functions specified in the flow diagram blocks. These computer program instructions may also be stored in a computer-readable memory 209 that may direct a computer or other programmable apparatus to function in a particular manner, such that the instructions stored in the computer-readable memory 209 produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flow diagram blocks.

Accordingly, blocks of the flow diagram 300 support combinations of means for performing the specified functions and combinations of operations for performing the specified functions. It will also be understood that one or more blocks of the flow diagram 300, and combinations of blocks in the flow diagram 300, can be implemented by special purpose hardwarebased computer systems which perform the specified functions, or combinations of special purpose hardware and computer instructions.

A method illustrated by the flow diagram 300 of FIG. 3 for generating a routing graph for a user includes, at 301, defining a geographic area of interest for the user and, at 303, identifying a cluster of shared vehicles of one or more mobility hubs in the area of interest. The method may further include, at 305, creating the routing graph from an edge of the one or more mobility hubs based on one or more preferences of the user and, at 307, providing the routing graph to a routing engine for calculating an intermodal route,. In certain embodiments, the intermodal route is presented to a user by way of the user interface 103. The method may further include identifying, by the processor 204, the cluster based on historical data about parking events associated with a plurality of shared vehicles, wherein the parking events include parking locations of the plurality of shared vehicles, durations of stay at the parking locations, or a combination thereof. The method may further include rendering, by the processor 204, a visualization of locations and reliability scores for each of the one or more mobility hubs on the output interface, that is, the user interface 103, in a mapping application.

In certain embodiments, the method includes updating the routing graph with one or more additional mobility hubs based on updated location and availability data of a plurality of shared vehicles located within the one or more additional mobility hubs. In other embodiments, the cluster is identified based on transient location of one or more shared vehicles located in the area of interest. In other examples, the cluster of the one or more two mobility hubs is identified based on a fixed area size, a line of sight between a plurality of shared vehicles, a grid level of a plurality of shared vehicles, or a combination thereof. In certain embodiments, the cluster of the one or more mobility hubs is identified based on one or more mobility patterns of the user, such as travel windows to and from work, travel patterns to shopping areas, etc. The method can include identifying location and availability of a plurality of public transportation vehicles in the area of interest for the user which may be used in combination with the shared vehicle to arrive at the intended destination. In other examples, the cluster is identified based on historical data about parking events associated with a plurality of shared vehicles. The parking events include parking locations of the plurality of shared vehicles, durations of stay at the parking locations, or a combination thereof.

In an example embodiment, a system for performing the method of FIG. 3 above may comprise a processor (e.g., the processor 204) configured to perform some or each of the operations (301-307) described above. The processor may, for example, be configured to perform the operations (301-307) by performing hardware implemented logical functions, executing stored instructions, or executing algorithms for performing each of the operations. Alternatively, the system may comprise means for performing each of the operations described above. In this regard, according to an example embodiment, examples of means for performing operations 301-307 may comprise, for example, the processor 204 and/or a device or circuit for executing instructions or executing an algorithm for processing information as described above.

The data inputted to the routing platform 105, for example, the sensor data, is transformed, processed, and executed upon by the routing platform 105 to determine relative positions of the shared vehicles in the mobility hubs and to provide a routing graph to a user of a shared vehicle to travel towards their intended destination. The sensor data, that is, the location data from the different sensors installed in the user equipment 102 or the vehicle 101 may be converted to units and ranges compatible with the routing platform 105, to accurately provide a routing graph from an edge of one or more mobility hubs based on at least user preference(s). The user preferences input by the user in natural language to the routing platform 105 are interpreted and processed by the routing platform 105 for clustering the shared vehicles into mobility hubs.

The routing platform 105 can compute one or more intermodal navigation routes from an edge of one or more of the mobility hubs, and a destination of the user using shared vehicle(s) available at the mobility hub(s). In some embodiments, the routing platform 105 determines the intermodal navigation routes based on user preferences and aggregated historical information related to the shared vehicle(s). Other factors includes real-time traffic data, weather, etc. The routing platform 105 can include public transportation for a portion of the route towards the destination of the user. For example, the generated route does not have to be between purely public transportation or purely shared vehicle. The routing platform 105 could propose to the user to take a first leg of the journey with a shared vehicle bike, whether it is to the next shared vehicle station providing a shared car, or a public transportation option such as a bus, light rail, trolley, train, or subway. The routing platform 105 can include a first route for the user to user one or more shared vehicles by way of one or more mobility hubs. The routing platform 105 can include a second route that provides a public transportation option to the destination of the user. The routing platform can include a travel time for each generated route together with the reliability of each route. The routing graph may be suitably rendered on the output interface, for example, the user interface 103 to enable the user to take advantage of the location of mobility hubs in the area of interest as well as the intermodal navigation assistance between shared vehicle mobility hub(s) as provided by the method discussed herein.

The method disclosed herein provides an improvement in computer related technology related to routing graphs. The routing platform 105 determines relative positions between different shared vehicles in a geographical region and clusters the shared vehicles in one or more mobility hubs based on the relative positions between them. The mobility hubs integrate different modes of transportation by providing multi-modal supportive infrastructure. The multi-modal supportive infrastructure include navigation to locations for the different shared vehicles around the mobility hubs, shelters at the mobility hubs, real-time traffic data around the mobility hub, charging stations for electric vehicles at the mobility hub, kiosks providing information regarding retail outlets around the mobility hub, etc.

The clustering of the shared vehicles into the mobility hubs is based on the personal attributes and preferences of the users of the shared vehicles, and/or aggregated historical positions of the shared vehicles. Due to the personalization and reliability of the mobility hubs, the mobility hubs contribute to user satisfaction of the mobility hubs and the user's likelihood of using the shared vehicle hubs as private transportation stations. The clustering of the shared vehicles into mobility hubs is also based on the geographic are of interest for the user and, optionally, service areas defined by the shared vehicle service provider. The routing platform 105 may rank the mobility hubs and the highest ranked mobility hub satisfies all or almost all preferences of the users. The routing platform can provide an estimated time and reliability of the route to the user in order for the user to make an informed decision. The routing platform 105 computes intermodal navigation routes from a mobility hub to a destination of the user. Using the rankings, the routing platform 105 can intelligently select a mobility hub with a higher rank towards the destination of the user as a part of the computation of the intermodal navigation routes. In certain examples, reliability could also be passed on to the routing platform 105. The cost of an edge could include a factor representing the reliability of the destination node if it is not the final destination. In certain examples, a user setting could then determine how strongly that factor is balanced against other factors such as travel time.

The user is allowed to select the best suitable intermodal navigation route from the list. The route may be a shared vehicle only route, a combination of shared vehicles and public transportation, or multiple routes can be generated. The mobility hubs may also include autonomous vehicles along with the shared vehicles driven by the users. The routing platform 105 can dynamically update the clusters and mobility hubs based on the relative positions of the shared vehicles.

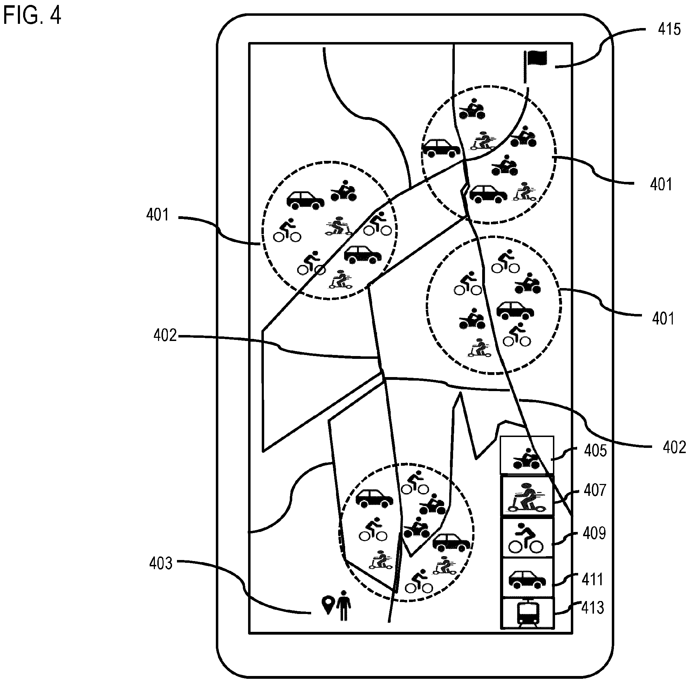

FIG. 4 exemplarily illustrates a diagram of an exemplary user interface 103 capable of identifying shared vehicle (SV) mobility hubs 401 in the vicinity of a starting location 403 of the user along roadways 402 of a displayed map. For example, the user's starting location 403 could be a home or work location of the user looking to go a destination 415. In this example, the clustering of shared vehicles within each mobility hub 401 are located between the general vicinity of the user's starting location and the destination 415. By way of example, user interface 103 can presents transport icons 405, 407, 409, and 413 of various shared vehicles such as shared bicycles, shared e-bicycles, shared kick scooters, shared scooters, and shared automobiles. Transport icon 413 is an example of a public transportation icon such as a train, light rail, or trolley. In certain embodiments, the user may filter the type of shared vehicle transport(s) to include a limited type or shared vehicles from a select shared vehicle service(s).

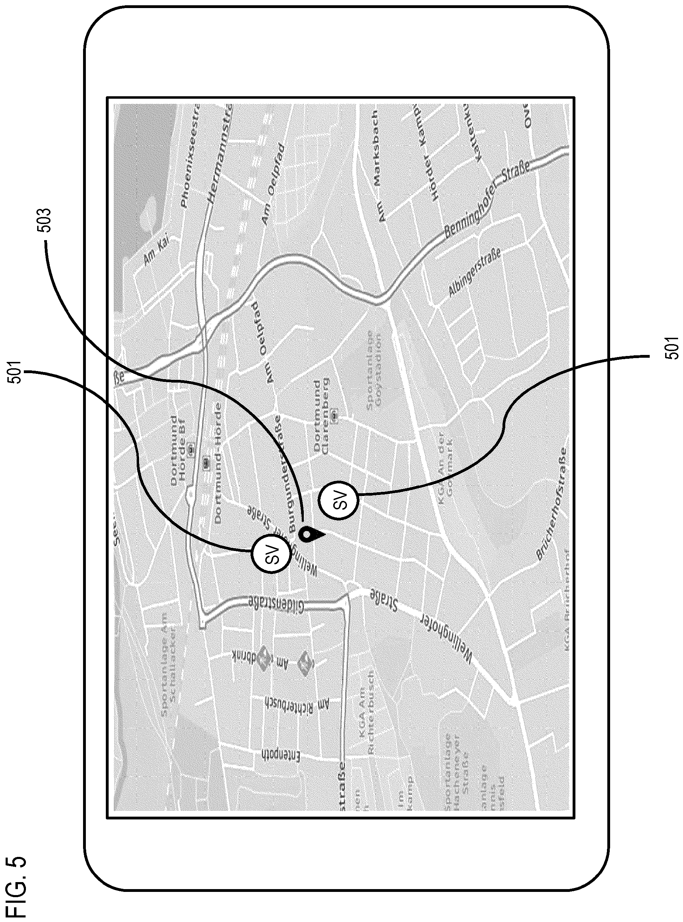

FIG. 5 exemplarily illustrates a diagram of another exemplary user interface 103 capable of identifying one or more shared vehicle (SV) mobility hubs 501 in the vicinity of a starting location 503 of the user. For example, the user's starting location 503 could be a home or work location of the user looking go somewhere. In this example, the user lives about 1km from subways and tram stations. However, due to the presence of many shared vehicles in this area, two mobility hubs 501 have recently emerged near her/his place 503, making her/his trips in the city much more convenient. The clustering of shared vehicles within each mobility hub 501 are located in the general vicinity of the user's starting location. In certain examples, the user prefers shared vehicle hubs that are located within a preferred walking distance from the user, e.g., within a 5 minute walk from the starting location or within 1.6 kilometers from the starting location 503.

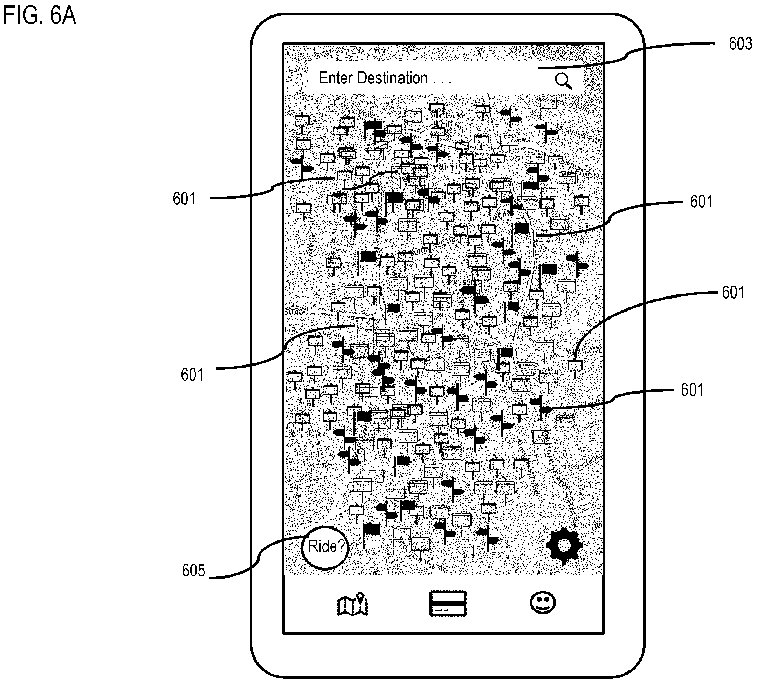

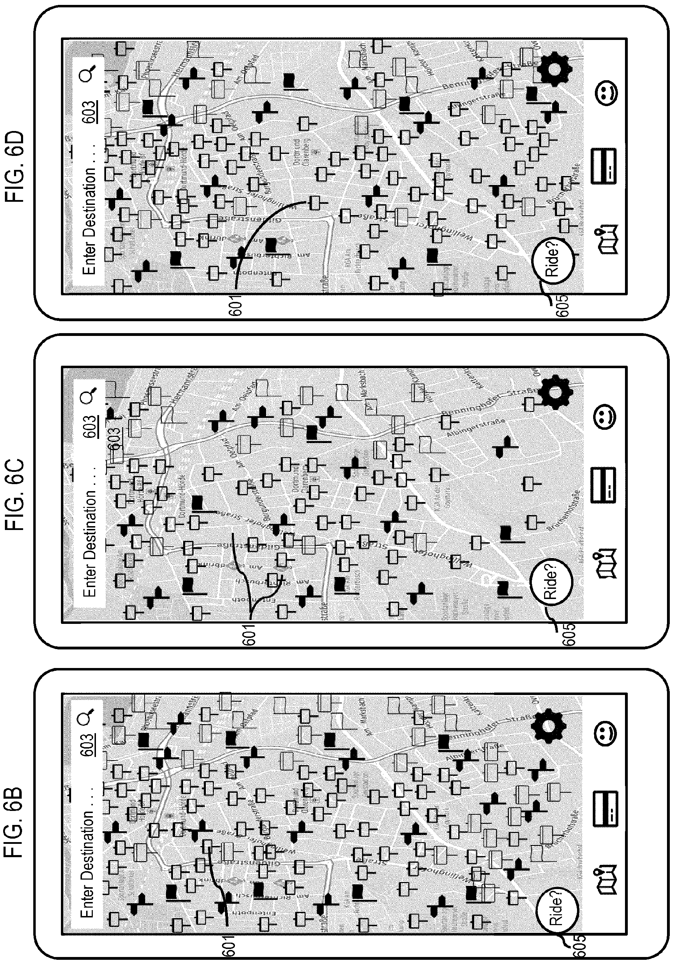

FIGs. 6A-6D exemplarily illustrate diagrams of an exemplary user interfaces 103 capable of identifying shared vehicles in the general vicinity of the user over time. FIGs. 6A-6D show the varying availability of shared vehicles over time, from which user-relevant mobility hubs can be determined in accordance with the examples described herein. FIGs. 6A-6D depict how shared vehicle availablity canges over time and the system of the present application is configured to determine relevant user specfic mobility hubs of shared vehicles from the continously changing information. The shared vehicles 601 in this example are identified by the company logo of a shared vehicle service. The company logo can include a name, symbol, or combination thereof, that the user can easily recognize. The user may input a destination in search area 603 of the user interface 103. The destination may be a work location, a sporting arena, restaurant, shopping mall, etc. The user may select icon 605 to reserve a shared vehicle 601 or find additional information about the shared vehicles 601 in the area.

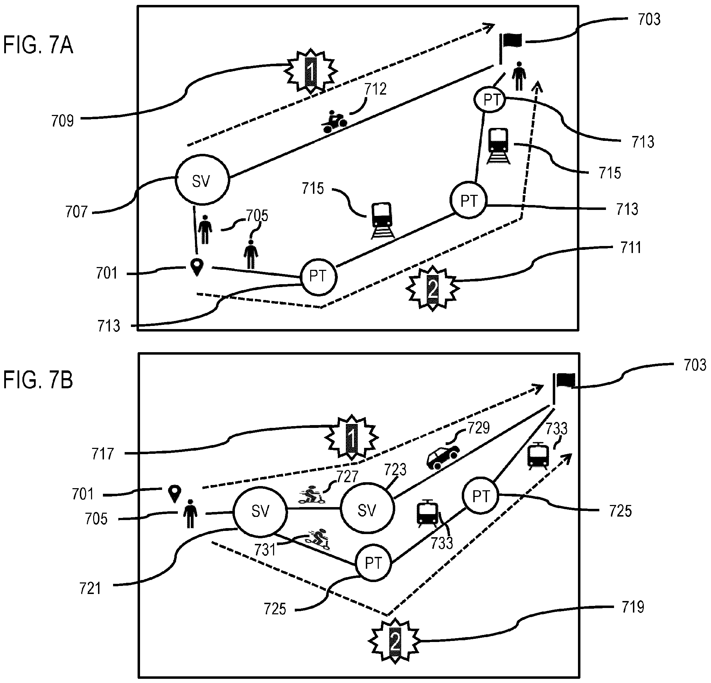

FIGs. 7A and 7B are illustrated diagrams for creating routing graphs from a starting point 701 to a destination 703 of user 705, in accordance with exemplary embodiments. FIG. 7A illustrates an intermodal navigation routes computed by the routing platform 105 to a destination 703 of a user 705 via shared vehicle (SV) mobility hub 707 comprising clustered shared vehicles, in accordance with an exemplary embodiment. Consider an example where a user 705 starts from a starting point 701 and intends to reach a destination 703. The user 705 employs the system 100 to navigate from the starting point 701 to the destination 703. The routing platform 105 of the system 100 may be configured to determine relative positions of shared vehicles operated by different shared vehicle service providers and cluster the shared vehicles into one or more mobility hubs 707, based on the personalized criteria of the user 705 as exemplarily illustrated. In this example, the user 705 enters in an intended destination through the user interface 103. The system can perform shared vehicle clustering mechanisms based on a grid of the geographic area, a fixed size of the geographic area, a line of sight between shared vehicles, and a combination thereof. Such analyses could be done at a grid level for a first analysis. A refinement of the grid could be done to identify the clusters more precisely within those grids. Another clustering mechanism could be around the line of sight. For example, a virtual point placed on a map would be like a private transportation station, from where all shared vehicles should be visible. In certain embodiments, a line of sight analysis can be performed which utilizes a three-dimensional (3D) model of the location to facilitate the user's experience.

The personalization of the shared vehicle clusters are based on user preferences and mobility patterns of the user. The system 100 is further configured to provide the user notifications when new clusters appear or disappear in the geographic area of interest. By creating virtual clusters, the system is capable of discretizing shared vehicles and allows connection to the routing platform 105 and the routing algorithms contained therein. Dedicated interfaces 103, such as icons and polygons, related to the clusters/hubs and their trends can be utilized by the system 100. For example, a cluster that is about to disappear can be visualized in the interface so that the user can have real time or near real time updates on cluster existence and cluster reliability. In certain embodiments, the system 100 is configured to influence the creation of shared vehicle clusters using social media or other forms of information. For example, some users might have an interest in the creation of such clusters/hubs and therefore might want to encourage/incentivize other users to leave their shared vehicle within a given geographic area or geofence. User could for example create dedicated groups on social networks (Facebook^{®}, Twitter^{®}, etc.), maps applications (such as Wego^{®} or Waze^{®}), shared vehicle application, neighbor applications (such as Nextdoor^{®}, Nebenan^{®}, etc.) to agree to form a cluster in their neighborhood. Sufficient numbers of shared vehicles in a given area would be necessary.

Different types of interfaces 103 are envisioned. For example, dedicated icons or polygons for newly formed clusters can be used. In other examples, icons or polygons becoming gradually more greyed out as they get more likely to disappear can be used. In yet other examples. icons or polygons having color coding reflecting their current availability can be used. For example, if the user wants to check the system in real time, a green color of the cluster/hub could represent that all vehicles are present as planned. An orange color could represent that some of the shared vehicles are missing or have been booked. A red color could indicate that many shared vehicles are currently missing on this hub, and the situation is unlikely to improve soon. The user could place an alert to be informed when this cluster will turn green again, which could be the time for her/him to go, if the user is flexible and not in a hurry. In other examples, augmented reality can be used such that a user could visualize clusters limit in and augmented reality (AR). The AR can be intuitive to a user, and the user could decide which hubs to inspect if there are any around the vicinity of the user.

As the availability of shared vehicles in a given geographic area changes over time, such clusters/hubs are likely to evolve, some will appear while others will disappear. In order to be relevant for users to be considered in their daily lives, the system 100 should be calibrated to avoid high volatility, e.g., creating clusters only when sufficient availability has been proven in a given area. When this is the case, users who are interested in such local benefit could be informed by some notification mechanism that a cluster, relevant for them and their mobility needs, has been newly formed in their area or an area of interest for them (e.g., next to work, next to their parents' place, etc.). By knowing that such cluster exists around their place, this would allow users to not have to open map applications when deciding to go somewhere, knowing that they can simply go to this cluster location and, as surely as they would take a bus at a bus stop, take a shared vehicle to their destination without wasting time. With the present system, the user can travel with confidence that the shared vehicle will be present. Once the mobility hubs are formed and visualized to the user, the user can subscribe to the mobility hubs to obtain the related updates, but also to make those clusters as new nodes for routing algorithms. Having mobility hubs with associated probabilities of a shared type being present allows the system 100 to use the mobility hub as a private transportation station in the routing.

In certain situations, public transportation hubs can be out of order and a user needs to find alternative means to get somewhere. The user could quickly search for nearby mobility hubs and make alternative travel plans and avoid delay. A user might be ready to accept of 20%, 60%, etc. of volatility/correlation of variance for given trips, depending how critical a particular trip or the ETA for a trip is (business versus leisure trip). Moreover, some decay function could apply, e.g., older shared vehicle availability pattern might become less relevant. Further, seasonality patterns should be considered and the system should include current and predicted weather.

The creation of virtual private transportation stations is based on the availability of some types of vehicles (defined by the user or defined by default by the system 100). In one example, if a geographic area (e.g., 150m) has over 95% of guarantee to have greater than or equal to 2 shared vehicles available at any time of the day, then the system 100 can show a virtual private transportation icon. Moreover, a user could define some characteristics of the clusters. For example, the user may want the clusters to be at most 150m. In other examples, the user does not mind the clusters being 300m large, but the user requires the clusters contain two bikes, two cars and two scooters.

In certain examples, fixed bike stations could be considered as hubs, depending on the availability of assets/bikes at the desired time slots. For example, a user routing back home could compute a route to the closest cluster to his/her home, either as destination or as waypoint. Place popularity, counting people on a vehicle, etc., could also be used as an input. System 100 could surface information such as 90% of a particular time slot (e.g., 12:30pm-12:45pm) had a vehicle of the users desired type in the last 12 months.

In certain embodiments, user preferences such as the user preferring bikes over cars in different segments of the route towards the destination, or a user's preference for one service provider over another, can be taken into consideration by the system 100. A virtual private transportation icon can be created for each user. Each user could have different outcomes visible in his/her user interface based on their own preferences, such as their preferred type of shared vehicle. By considering the user's preferences, the routing platform 105 may cluster more of one type of shared vehicle, such as an electric scooter, in the mobility hub 707. The routing platform 105 may not include a car of particular service provider in mobility hub 707 even if that particular car is available in the vicinity of the mobility hub 707, considering the preference of the user.

In FIG. 7A, the routing platform 105 guides the user 705 from the starting point 701 toward the vicinity of the mobility hub 707. The routing platform 105 provides graph routing recommendation(s). In the example of FIG. 7A, the user has the option to select first route 709 or second route 711. With route 709, the user can begin from starting point 701 and proceed to mobility hub 707, such as by walking. With the first route 709, the user 705 can opt to select a shared vehicle from the cluster of shared vehicles within mobility hub 707. As shown in this example, the user opts to rent the shared vehicle 712 from the mobility hub 707 and proceed along the first route 709 prescribed by the routing platform until the user reaches destination 703. With the first route 709, the user can be informed of the distance and time that the first route will take to reach destination 703. Moreover, the system 100 is configured to calculate the reliability of the existence of the mobility hub 707 and the likelihood that a shared vehicle 712 will be present for usage by the user 705. The user 705 can be provided with a visualization of the reliability of the first route 709 together with the time and distance information such that the user can make an informed route selection.

In the example of FIG. 7A, the second route 711 option guides the user to destination 703 by way of public transportation hubs 713. In this example, the routing platform has calculated the second route 711 option that will allow the user 705 to walk (or ride their bicycle) to a public transportation hub 713 closest to their starting point 701 and then proceed to travel along the second route 711 by way of a public transportation vehicle, such as a train, trolley, light rail, etc. With the second route 711, the user 705 can be informed of the distance and time that the second route will take to reach destination 703. Moreover, the system 100 is configured to calculate the reliability of the existence of the public transportation hub 713 and the likelihood that the public transportation vehicle 715 will be present for usage by the user 705. Public transportation records can be accessed for the system to determine schedules and travel times of public transportation vehicles. The user can be provided with a visualization of the reliability of the second route 711 together with the time and distance information such that the user can make an informed route selection.

In certain examples, the system 100 has access to a user's calendar entries. For example, the system determines a concrete travel time of Monday at 12:30 pm is based on a calendar entry in the user's email calendar (e.g., MS Outlook^{®}). The system 100 looks at which hubs typically exist at this exact time slot and it computes an index for that specific time window by looking at all historical data for shared vehicles. System 100 makes a proactive route proposal, e.g., 30 min before (12:00pm) based on the presence of those virtual hubs. If the user likes the transport mode, the route and the proposed estimated time of arrival (ETA), he/she can accept the route and the shared vehicle is automatically reserved for the user. Routing algorithms typically require discrete nodes, while shared vehicles continuously change their position. Therefore, the system of the present application recognizes patterns over time and creates virtual clusters that discretizes shared vehicles and allows the connection to routing algorithms. Multiple routes can be calculated and displayed for the user, for which different reliability percentages may be calculated based on the likelihood of finding shared vehicle clusters. For example, a user can decide between a faster, but less reliable routes, or slower, but reliable connection. In one example, personalized or general shared vehicle hubs can be represented as discrete entities and can be used by the system 100 for proposing alternative routes to the user. Because of the stochastic nature of the shared vehicle hubs, the reliability, i.e., the chance that a vehicle required to fulfill the route will be present, becomes a property of the route.

FIG. 7B is another illustrated diagram of a method comprising steps for creating graphing routes from a starting point 701 to a destination 703 of user 705, in accordance with another exemplary embodiment. In FIG. 7B, the routing platform 105 can generate multiple routes for the user to select from. In this example, the user starts off with a shared vehicle, but has the option of choosing the route with additional shared vehicles, or another route option that utilizes public transportation.

In FIG. 7B, the routing platform 105 guides the user 705 from the starting point 701 toward the in the vicinity of the mobility hub 721. The routing platform 105 provides graph routing recommendation(s). In the example of FIG. 7B, the user has the option to select first route 717 or second route 719. Additional routes can be generated by the routing platform 105. With route 717, the user 705 can begin from starting point 701 and proceed to mobility hub 721, such as by walking. With the first route 717, the user 705 can opt to select a shared vehicle from the cluster of shared vehicles within mobility hub 721. As shown in this example, the user 705 opts to rent the shared vehicle 727, such as a scooter, from the mobility hub 721 and proceed along the route prescribed by the routing platform until the user reaches the second mobility hub 723. At the second mobility hub 723, the user selects a second shared vehicle 729 to continue along to destination 703. Additional mobility hubs can be displayed for the user to choose from. With the first route 717, the user can be informed of the distance and time that the first route will take to reach destination 703. Moreover, the system 100 is configured to calculate the reliability of the existence of the mobility hubs 721, 723 and the likelihood that shared vehicles 727, 729 will be present for usage by the user 705. The user can be provided with a visualization of the reliability of the first route 717 together with the time and distance information such that the user can make an informed route selection.

In the example of FIG. 7B, the second route 719 option guides the user to destination 703 by way of both shared vehicle mobility hubs 721, as well as public transportation hubs 725. In this example, the routing platform 105 has calculated the second route 719 option that will allow the user 705 to walk to mobility hub 721 closest to their starting point 701 and then proceed to travel along the second route 719 by way of a shared vehicle 731, such as an electric scooter, electric bike, etc. With the second route 719, the user 705 can be informed of the distance and time that the second route will take to reach destination 703. Moreover, the system 100 is configured to calculate the reliability of the existence of the mobility hub 721 and public transportation hubs 725 and the likelihood that the shared vehicle 731 and public transportation vehicle 733 will be present for usage by the user 705. Public transportation records can be accessed for the system to determine schedules and travel times. The user can be provided with a visualization of the reliability of the second route 719 together with the time and distance information such that the user can make an informed route selection. In this example, the public transportation hub will have a reliability of greater than 99%.

With respect to routing graph generation, nodes and edges are utilized for a personalized shared vehicle routing graph. A routing algorithm typically requires a graph of connected nodes and edges in order to calculate the possible routes that will eventually bring the user from their starting location to their destination. For example, an edge one mobility hub can connect to an edge of another mobility hub such that the mobility hubs are joined. With respect to graph nodes, the locations for the different shared vehicle clusters are initially identified on the map. The shared vehicle cluster is described by its centroid location, time constraints (e.g., time slot when it is expected to exist), composition (e.g., number of shared vehicles and vehicle types), and a reliability score (e.g., likelihood in percentage to exist) for the cluster. Individual reliability scores for the different shared vehicle types in the clusters may be assigned as well. The complete reliability score may be calculated based on the individual reliability scores. Each of the shared vehicle clusters is considered as one node of the shared vehicle routing graph. As the node existence is time-dependent, different graphs may be valid for different time epochs.

With respect to graph edges, the connectivity between nodes needs to be established to obtain a functioning routing graph. Since the shared vehicle approach is intended to provide the user with a "drop anywhere" experience, it is unlikely that there will be multimodal routes hopping between adjacent clusters. Instead, connections between edges may be established for a distance range from e.g., X meters up to Y km. These distances are dependent on vehicle type. For example, while it is unlikely that any user would take a shared car for a 500m ride, it is probable that someone would take an e-scooter to reach a shared car 500m away. For the upper limit, it is also unlikely that someone would take an e-scooter for a 10 km ride, but conversely likely that same user would take a car. In other words, not all edges need to be connected, but only those separated by a distance threshold. It may be in some examples that some edges are connected for e.g., car mode of transport, but unconnected for e-scooter mode of transport. To simplify determining these edges, the grid approach mentioned above can be used. Once the edges are established, routes between the edges for the different modes of transport can be calculated. The cost of traversing each edge (e.g., on each mode of transport) is stored as an edge property, from which a cost function for traversing the edge can be determined. In certain embodiments, the cost of traversing each edge can be derived from a direct line distance, a road-network distance, a Manhattan distance, or a taxicab distance .

With respect to customization, once the shared vehicle routing graph has been created, user preferences (e.g., node availability likelihood, vehicle types, maximum distances to travel on a specific vehicle type, service operator/brand, etc.) can be applied to the routing graph as a filter to reduce the number of candidate nodes. In other examples. a user/routing request specific graph can be created by initially constructing the graph with clusters filtered according to user preferences and limiting the search area. The area may be limited to an area corresponding to the user mobility patterns or to an area encompassing the start and destination of the routing request.

With respect to the quality of service for a given mobility hub, the user can define the quality of service and/or could be based on matching historical mobility patterns. This would reflect the fact that users do not necessarily care of the availability of shared vehicles at times they do not need to move from that area. In certain examples, the system 100 could indicate 95% of availability for a given virtual hub for the time slots which are relevant for a given user. For example, every morning between 8:00am and 9:30am and on the weekends from 10:00am-6:00pm, since these windows are the times the user generally needs a shared vehicles to go to work or to run some errands, etc. With the present inventive concept, a user would become more familiar with those shared clusters adjacent to her/his home, work, familiar places, etc.

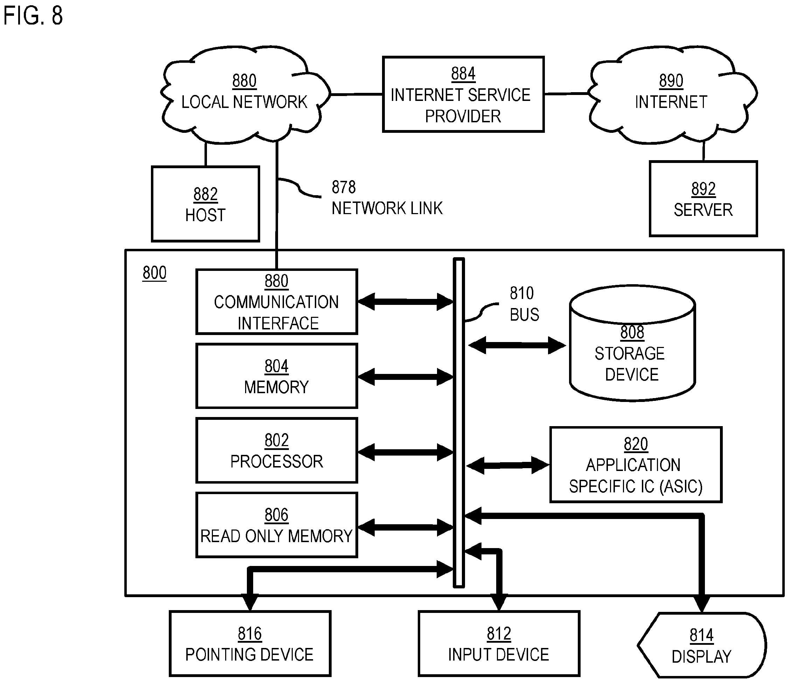

FIG. 8 illustrates a computer system 800 upon which an embodiment of the application may be implemented. Although computer system 800 is depicted with respect to a particular device or equipment, it is contemplated that other devices or equipment (e.g., network elements, servers, etc.) within FIG. 8 can deploy the illustrated hardware and components of system 800. Computer system 800 is programmed (e.g., via computer program code or instructions) to provide routing graph, shared vehicle availability detection, and optimizing intermodal route computations as described herein and includes a communication mechanism such as a bus 810 for passing information between other internal and external components of the computer system 800. Information (also called data) is represented as a physical expression of a measurable phenomenon, typically electric voltages, but including, in other embodiments, such phenomena as magnetic, electromagnetic, pressure, chemical, biological, molecular, atomic, subatomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range. Computer system 800, or a portion thereof, constitutes a means for performing one or more steps of optimizing intermodal route computations.

A bus 810 includes one or more parallel conductors of information so that information is transferred quickly among devices coupled to the bus 810. One or more processors 802 for processing information are coupled with the bus 810.

A processor (or multiple processors) 802 performs a set of operations on information as specified by computer program code related to creating discrete shared vehicle hubs based on aggregated historical shared vehicle positions. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 810 and placing information on the bus 810. The set of operations also typically include comparing two or more units of information, shifting positions of units of information, and combining two or more units of information, such as by addition or multiplication or logical operations like OR, exclusive OR (XOR), and. Each operation of the set of operations that can be performed by the processor is represented to the processor by information called instructions, such as an operation code of one or more digits. A sequence of operations to be executed by the processor 802, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 800 also includes a memory 804 coupled to bus 810. The memory 804, such as a random access memory (RAM) or any other dynamic storage device, stores information including processor instructions for creating discrete shared vehicle hubs. Dynamic memory allows information stored therein to be changed by the computer system 800. RAM allows a unit of information stored at a location called a memory address to be stored and retrieved independently of information at neighboring addresses. The memory 804 is also used by the processor 802 to store temporary values during execution of processor instructions. The computer system 800 also includes a read only memory (ROM) 806 or any other static storage device coupled to the bus 810 for storing static information, including instructions, that is not changed by the computer system 800. Some memory is composed of volatile storage that loses the information stored thereon when power is lost. Also coupled to bus 810 is a non-volatile (persistent) storage device 808, such as a magnetic disk, optical disk or flash card, for storing information, including instructions, that persists even when the computer system 800 is turned off or otherwise loses power.

Information, including instructions for creating discrete shared vehicle hubs, is provided to the bus 810 for use by the processor from an external input device 812, such as a keyboard containing alphanumeric keys operated by a human user, or a sensor. A sensor detects conditions in its vicinity and transforms those detections into physical expression compatible with the measurable phenomenon used to represent information in computer system 800. Other external devices coupled to bus 810, used primarily for interacting with humans, include a display device 814, such as a cathode ray tube (CRT), a liquid crystal display (LCD), a light emitting diode (LED) display, an organic LED (OLED) display, a plasma screen, or a printer for presenting text or images, and a pointing device 816, such as a mouse, a trackball, cursor direction keys, or a motion sensor, for controlling a position of a small cursor image presented on the display 814 and issuing commands associated with graphical elements presented on the display 814. In some embodiments, for example, in embodiments in which the computer system 800 performs all functions automatically without human input, one or more of external input device 812, display device 814 and pointing device 816 is omitted.

In the illustrated embodiment, special purpose hardware, such as an application specific integrated circuit (ASIC) 820, is coupled to bus 810. The special purpose hardware is configured to perform operations not performed by processor 802 quickly enough for special purposes. Examples of ASICs include graphics accelerator cards for generating images for display 814, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 800 also includes one or more instances of a communications interface 880 coupled to bus 810. Communication interface 880 provides a one-way or two-way communication coupling to a variety of external devices that operate with their own processors, such as printers, scanners and external disks. In general, the coupling is with a network link 878 that is connected to a local network 880 to which a variety of external devices with their own processors are connected. For example, communication interface 880 may be a parallel port or a serial port or a universal serial bus (USB) port on a personal computer. In some embodiments, communications interface 880 is an integrated services digital network (ISDN) card or a digital subscriber line (DSL) card or a telephone modem that provides an information communication connection to a corresponding type of telephone line. In some embodiments, a communication interface 880 is a cable modem that converts signals on bus 810 into signals for a communication connection over a coaxial cable or into optical signals for a communication connection over a fiber optic cable. As another example, communications interface 880 may be a local area network (LAN) card to provide a data communication connection to a compatible LAN, such as Ethernet. Wireless links may also be implemented. For wireless links, the communications interface 880 sends or receives or both sends and receives electrical, acoustic or electromagnetic signals, including infrared and optical signals, that carry information streams, such as digital data. For example, in wireless devices, such as mobile computers like vehicle infotainment system, the communications interface 880 includes a radio band electromagnetic transmitter and receiver called a radio transceiver. In certain embodiments, the communications interface 880 enables connection to the communication network 107 for sending discrete shared vehicle hubs to the UE 102.

The term "computer-readable medium" as used herein refers to any medium that participates in providing information to processor 802, including instructions for execution. Such a medium may take many forms, including, but not limited to computer-readable storage medium (e.g., non-volatile media, volatile media), and transmission media. Non-transitory media, such as non-volatile media, include, for example, optical or magnetic disks, such as storage device 808. Volatile media include, for example, dynamic memory 804. Transmission media include, for example, twisted pair cables, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, an EEPROM, a flash memory, any other memory chip or cartridge, a carrier wave, or any other medium from which a computer can read. The term computer-readable storage medium is used herein to refer to any computer-readable medium except transmission media.

Logic encoded in one or more tangible media includes one or both of processor instructions on a computer-readable storage media and special purpose hardware, such as ASIC 820.

Network link 878 typically provides information communication using transmission media through one or more networks to other devices that use or process the information. For example, network link 878 may provide a connection through local network 880 to a host computer 882 or to equipment 884 operated by an Internet Service Provider (ISP). ISP equipment 884 in turn provides data communication services through the public, world-wide packet-switching communication network of networks now commonly referred to as the Internet 890.

A computer called a server host 892 connected to the Internet hosts a process that provides a service in response to information received over the Internet. For example, server host 892 hosts a process that provides information representing video data for presentation at display 814. It is contemplated that the components of system 800 can be deployed in various configurations within other computer systems, e.g., host 882 and server 892.

At least some embodiments of the application are related to the use of computer system 800 for implementing some or all of the techniques described herein. According to one embodiment of the application, those techniques are performed by computer system 800 in response to processor 802 executing one or more sequences of one or more processor instructions contained in memory 804. Such instructions, also called computer instructions, software and program code, may be read into memory 804 from another computer-readable medium such as storage device 808 or network link 878. Execution of the sequences of instructions contained in memory 804 causes processor 802 to perform one or more of the method steps described herein. In alternative embodiments, hardware, such as ASIC 820, may be used in place of or in combination with software to implement the application. Thus, embodiments of the application are not limited to any specific combination of hardware and software, unless otherwise explicitly stated herein.

The signals transmitted over network link 878 and other networks through communications interface 880, carry information to and from computer system 800. Computer system 800 can send and receive information, including program code, through the networks 880, 890 among others, through network link 878 and communications interface 880. In an example using the Internet 890, a server host 892 transmits program code for a particular application, requested by a message sent from computer 800, through Internet 890, ISP equipment 884, local network 880 and communications interface 880. The received code may be executed by processor 802 as it is received, or may be stored in memory 804 or in storage device 808 or any other non-volatile storage for later execution, or both. In this manner, computer system 800 may obtain application program code in the form of signals on a carrier wave.

Various forms of computer readable media may be involved in carrying one or more sequence of instructions or data or both to processor 802 for execution. For example, instructions and data may initially be carried on a magnetic disk of a remote computer such as host 882. The remote computer loads the instructions and data into its dynamic memory and sends the instructions and data over a telephone line using a modem. A modem local to the computer system 800 receives the instructions and data on a telephone line and uses an infra-red transmitter to convert the instructions and data to a signal on an infra-red carrier wave serving as the network link 878. An infrared detector serving as communications interface 880 receives the instructions and data carried in the infrared signal and places information representing the instructions and data onto bus 810. Bus 810 carries the information to memory 804 from which processor 802 retrieves and executes the instructions using some of the data sent with the instructions. The instructions and data received in memory 804 may optionally be stored on storage device 808, either before or after execution by the processor 802.

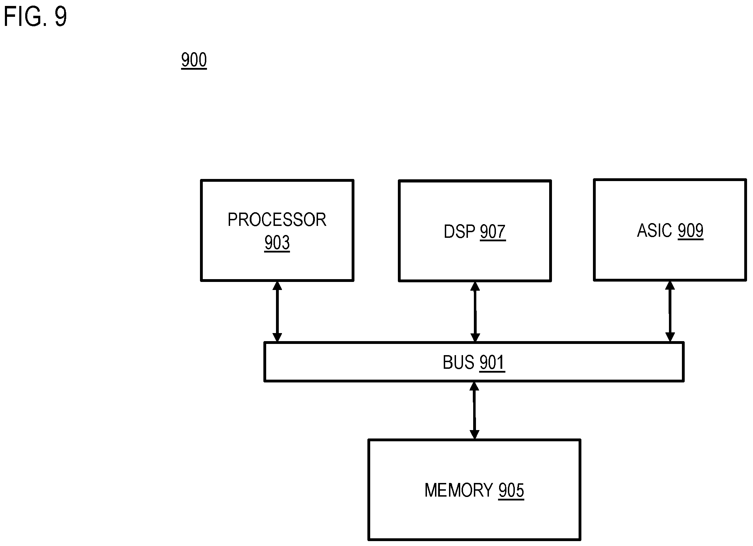

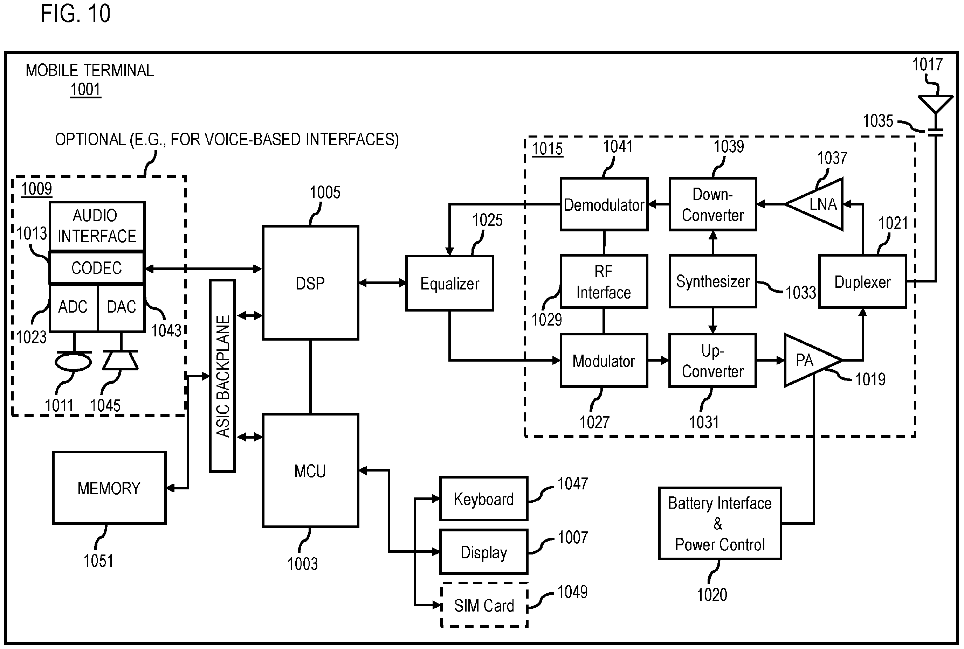

FIG. 9 illustrates a chip set or chip 900 upon which an embodiment of the application may be implemented. Chip set 900 is programmed to provide discrete shared vehicle hubs as described herein and includes, for instance, the processor and memory components described with respect to FIG. 10 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set 900 can be implemented in a single chip. It is further contemplated that in certain embodiments the chip set or chip 900 can be implemented as a single "system on a chip." It is further contemplated that in certain embodiments a separate ASIC would not be used, for example, and that all relevant functions as disclosed herein would be performed by a processor or processors. Chip set or chip 900, or a portion thereof, constitutes a means for performing one or more steps of providing user interface navigation information associated with the availability of functions. Chip set or chip 900, or a portion thereof, constitutes a means for performing one or more steps of creating discrete shared vehicle hubs and generating graphing routes between hubs.

In one embodiment, the chip set or chip 900 includes a communication mechanism such as a bus 901 for passing information among the components of the chip set 900. A processor 903 has connectivity to the bus 901 to execute instructions and process information stored in, for example, a memory 905. The processor 903 may include one or more processing cores with each core configured to perform independently. A multi-core processor enables multiprocessing within a single physical package. Examples of a multi-core processor include two, four, eight, or greater numbers of processing cores. Alternatively, or in addition, the processor 903 may include one or more microprocessors configured in tandem via the bus 901 to enable independent execution of instructions, pipelining, and multithreading. The processor 903 may also be accompanied with one or more specialized components to perform certain processing functions and tasks such as one or more digital signal processors (DSP) 907, or one or more application-specific integrated circuits (ASIC) 909. A DSP 907 typically is configured to process real-world signals (e.g., sound) in real time independently of the processor 903. Similarly, an ASIC 909 can be configured to performed specialized functions not easily performed by a more general purpose processor. Other specialized components to aid in performing the inventive functions described herein may include one or more field programmable gate arrays (FPGA) (not shown), one or more controllers (not shown), or one or more other special-purpose computer chips.

In one embodiment, the chip set or chip 900 includes merely one or more processors and some software and/or firmware supporting and/or relating to and/or for the one or more processors.

The processor 903 and accompanying components have connectivity to the memory 905 via the bus 901. The memory 905 includes both dynamic memory (e.g., RAM, magnetic disk, writable optical disk, etc.) and static memory (e.g., ROM, CD-ROM, etc.) for storing executable instructions that when executed perform the inventive steps described herein to provide shared vehicle availability detection based on vehicle trajectory information. The memory 905 also stores the data associated with or generated by the execution of the inventive steps.

FIG. 10 is a diagram of exemplary components of a mobile terminal (e.g., mobile computers such as vehicle infotainment system, vehicle embedded system, smartphones, etc.) for communications, which is capable of operating in the system of FIG. 1A, according to one embodiment. In some embodiments, mobile terminal 1001, or a portion thereof, constitutes a means for performing one or more steps of creating discrete shared vehicle hubs and generating routing graphs between the hubs. Generally, a radio receiver is often defined in terms of front-end and back-end characteristics. The front-end of the receiver encompasses all of the Radio Frequency (RF) circuitry whereas the back-end encompasses all of the base-band processing circuitry. As used in this application, the term "circuitry" refers to both: (1) hardware-only implementations (such as implementations in only analog and/or digital circuitry), and (2) to combinations of circuitry and software (and/or firmware) (such as, if applicable to the particular context, to a combination of processor(s), including digital signal processor(s), software, and memory(ies) that work together to cause an apparatus, such as a mobile computer or server, to perform various functions). This definition of "circuitry" applies to all uses of this term in this application, including in any claims. As a further example, as used in this application and if applicable to the particular context, the term "circuitry" would also cover an implementation of merely a processor (or multiple processors) and its (or their) accompanying software/or firmware. The term "circuitry" would also cover if applicable to the particular context, for example, a baseband integrated circuit or applications processor integrated circuit in a mobile computer or a similar integrated circuit in network device (e.g., a cellular network device or data other network devices).

Pertinent internal components of the mobile terminal include a Main Control Unit (MCU) 1003, a Digital Signal Processor (DSP) 1005, and a receiver/transmitter unit. In one embodiment, wherein voice-based interaction and/or communications are supported at the mobile terminal, the mobile terminal may also include a microphone gain control unit and a speaker gain control unit. A main display unit 1007 provides a display to the user in support of various applications and mobile terminal functions that perform or support the steps of optimizing intermodal route computations. The display 1007 includes display circuitry configured to display at least a portion of a user interface of the mobile terminal (e.g., mobile telephone). Additionally, the display 1007 and display circuitry are configured to facilitate user control of at least some functions of the mobile terminal. In embodiments supporting voice-based interactions and/or communications, an audio function circuitry 1009 includes a microphone 1011 and microphone amplifier that amplifies the speech signal output from the microphone 1011. The amplified speech signal output from the microphone 1011 is fed to a coder/decoder (CODEC) 1013.

A radio section 1015 amplifies power and converts frequency in order to communicate with a base station (e.g., data and/or voice communications), which is included in a mobile communication system, via antenna 1017. The power amplifier (PA) 1019 and the transmitter/modulation circuitry are operationally responsive to the MCU 1003, with an output from the PA 1019 coupled to the duplexer 1021 or circulator or antenna switch, as known in the art. The PA 1019 also couples to a battery interface and power control unit 1020.

In use, data to support optimizing intermodal route computations is formatted into network packets (e.g., Internet Protocol (IP) packets) for transmission using one or more network transmission protocol (e.g., a cellular network transmission protocol described in more detail below). In one embodiment, the network packets include control information and payload data, with the control information specifying originating/destination network addresses, error control signals, signals for reconstructing the user data from the packets, and/or other related information. In embodiments supporting voice-based interaction and/or communications, a user of mobile terminal 1001 speaks into the microphone 1011 and his or her voice along with any detected background noise is converted into an analog voltage. The analog voltage is then converted into a digital signal through the Analog to Digital Converter (ADC) 1023. The control unit 1003 routes the digital signal into the DSP 1005 for processing therein, such as speech recognition, speech encoding, channel encoding, encrypting, and interleaving.

In one embodiment, the processed network packets and/or voice signals are encoded, by units not separately shown, using a cellular transmission protocol such as enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wideband code division multiple access (WCDMA), wireless fidelity (WiFi), satellite, and the like, or any combination thereof.

The encoded signals are then routed to an equalizer 1025 for compensation of any frequency-dependent impairments that occur during transmission through the air such as phase and amplitude distortion. After equalizing the bit stream, the modulator 1027 combines the signal with a RF signal generated in the RF interface 1029. The modulator 1027 generates a sine wave by way of frequency or phase modulation. In order to prepare the signal for transmission, an upconverter 1031 combines the sine wave output from the modulator 1027 with another sine wave generated by a synthesizer 1033 to achieve the desired frequency of transmission. The signal is then sent through a PA 1019 to increase the signal to an appropriate power level. In practical systems, the PA 1019 acts as a variable gain amplifier whose gain is controlled by the DSP 1005 from information received from a network base station. The signal is then filtered within the duplexer 1021 and optionally sent to an antenna coupler 1035 to match impedances to provide maximum power transfer. Finally, the signal is transmitted via antenna 1017 to a local base station. An automatic gain control (AGC) can be supplied to control the gain of the final stages of the receiver. The local base station or similar component then forwards data or network packets to a gateway server (e.g., a gateway to the Internet) for connectivity to network components. In embodiments supporting voice-based interactions and/or communications, voice signals may be forwarded from the local base station to a remote terminal which may be another mobile computer, cellular telephone, and/or any other mobile phone or a land-line connected to a Public Switched Telephone Network (PSTN), or other telephony networks.

Voice signals transmitted to the mobile terminal 1001 are received via antenna 1017 and immediately amplified by a low noise amplifier (LNA) 1037. A down-converter 1039 lowers the carrier frequency while the demodulator 1041 strips away the RF leaving only a digital bit stream. The signal then goes through the equalizer 1025 and is processed by the DSP 1005. A Digital to Analog Converter (DAC) 1043 converts the signal and the resulting output is transmitted to the user through the speaker 1045, all under control of a Main Control Unit (MCU) 1003 which can be implemented as a Central Processing Unit (CPU) (not shown).

The MCU 1003 receives various signals including input signals from the keyboard 1047. The keyboard 1047 and/or the MCU 1003 in combination with other user input components (e.g., the microphone 1011) comprise a user interface circuitry for managing user input. The MCU 1003 runs a user interface software to facilitate user control of at least some functions of the mobile terminal 1001 to provide discrete shared vehicle hubs and routing graph between the hubs. The MCU 1003 also delivers a display command and a switch command to the display 1007 and to the speech output switching controller, respectively. Further, the MCU 1003 exchanges information with the DSP 1005 and can access an optionally incorporated SIM card 1049 and a memory 1051. In addition, the MCU 1003 executes various control functions required of the terminal. The DSP 1005 may, depending upon the implementation, perform any of a variety of conventional digital processing functions on the voice signals. Additionally, DSP 1005 determines the background noise level of the local environment from the signals detected by microphone 1011 and sets the gain of microphone 1011 to a level selected to compensate for the natural tendency of the user of the mobile terminal 1001.

The CODEC 1013 includes the ADC 1023 and DAC 1043. The memory 1051 stores various data including call incoming tone data and is capable of storing other data including music data received via, e.g., the global Internet. The software module could reside in RAM memory, flash memory, registers, or any other form of writable storage medium known in the art. The memory device 1051 may be, but not limited to, a single memory, CD, DVD, ROM, RAM, EEPROM, optical storage, magnetic disk storage, flash memory storage, or any other non-volatile storage medium capable of storing digital data.

An optionally incorporated SIM card 1049 carries, for instance, important information, such as the cellular phone number, the carrier supplying service, subscription details (e.g., data and/or voice subscriptions), and security information. The SIM card 1049 serves primarily to identify the mobile terminal 1001 on a radio network. The card 1049 also contains a memory for storing a personal telephone number registry, text messages, and user specific mobile terminal settings.

Many modifications and other embodiments of the applications set forth herein will come to mind to one skilled in the art to which these applications pertain having the benefit of the teachings presented in the foregoing descriptions and the associated drawings. Therefore, it is to be understood that the applications are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system for generating a routing graph for a user, the system comprising:
at least one non-transitory memory configured to store computer program code instructions; and at least one processor configured to execute the computer program code instructions to:
define a geographic area of interest for the user;
identify a cluster of shared vehicles for one or more mobility hubs in the area of interest;
create the routing graph from an edge of the one or more mobility hubs based on one or more preferences of the user; and
provide the routing graph to a routing engine for calculating an intermodal route.

2. The system of claim 1, wherein the processor is further configured to update the routing graph with one or more additional mobility hubs based on updated location and availability data of a plurality of shared vehicles forming the one or more additional mobility hubs.

3. The system of claim 1, wherein the processor is further configured to identify the cluster based on transient location of one or more shared vehicles located in the area of interest.

4. The system of claim 1, wherein the processor is further configured to identify the cluster of the one or more mobility hubs based on a fixed area size, a line of sight between a plurality of shared vehicles, a grid level of a plurality of shared vehicles, or a combination thereof.

5. The system of claim 1, wherein the processor is further configured to identify the cluster of the one or more mobility hubs based on one or more mobility patterns of the user.

6. The system of claim 1, wherein the processor is further configured to aggregate location and availability of a plurality of public transportation vehicles in the area of interest for the user.

7. The system of claim 1, wherein the processor is further configured to identify the cluster based on historical data about parking events associated with a plurality of shared vehicles, wherein the parking events include parking locations of the plurality of shared vehicles, durations of stay at the parking locations, or a combination thereof.

8. The system of claim 1, wherein the processor is further configured to render a visualization of locations and reliability scores for each of the one or more mobility hubs on the output interface in a mapping application.

9. The system of claim 1, wherein the processor is further configured to present comparisons between at least two routes in terms of reliability of the routes.

10. The system of claim 1, wherein the user preferences comprise user preference regarding types and brands of shared vehicles, cluster radii of the one or more mobility hubs, cleanliness of the shared vehicles, ratings associated with the shared vehicles, fuel or charging level of the shared vehicles, number of vehicles desired to create the one or more mobility hubs, distance to one or more available shared vehicles, and user subscription associated with the one or more shared vehicle service providers.

11. The system of claim 1, wherein the processor is further configured to reserve at least one of shared vehicle in at least one of the one or more mobility hubs.

12. The system of claim 11, wherein the shared vehicles are selected from the group consisting of shared bicycles, shared e-bicycles, shared kick scooters, shared scooters, and shared automobiles.

13. The system of claim 9, wherein the processor is further configured to limit the area of interest for the user based on a starting and destination request by the user.

14. A method for generating a routing graph for a user, the method comprising:
defining a geographic area of interest for the user;
identifying a cluster of shared vehicles for one or more mobility hubs in the area of interest;
creating the routing graph from an edge of the one or more mobility hubs based on one or more preferences of the user; and
providing the routing graph to a routing engine for calculating an intermodal route.

15. A computer program comprising computer-executable program code instructions which when executed by a computer, cause the computer to carry out operations for generating a routing graph for a user, the operations comprising:
defining a geographic area of interest for the user;
identifying a cluster of shared vehicles for one or more mobility hubs in the area of interest;
creating the routing graph from an edge of the one or more mobility hubs based on one or more preferences of the user; and
providing the routing graph to a routing engine for calculating an intermodal route.
